# EUROPEAN PATENT SPECIFICATION

(11) **EP 1 372 064 B1**
(45) Date of publication and mention of the grant of the patent: **04.08.2010**
(21) Application number: 03253697.1
(22) Date of filing: 11.06.2003
(51) Int. Cl.: G06F 9/32

(54) **Processor improving parallelism of execution of instructions**
Prozessor zur Verbesserung der Parallelität bei der Durchführung von Befehlen
Processeur améliorant le parallélisme de l'exécution d'instructions

(30) Priority: 14.06.2002 JP 2002174927
(43) Date of publication of application: 17.12.2003
(73) Proprietor: Panasonic Corporation, Kadoma-shi Osaka 571-8501 (JP)
(72) Inventor: Heishi, Taketo, Osaka-fu, 536-0008 (JP); Ogawa, Hajime, Suita-shi, Osaka 564-0004 (JP); Takayama, Shuichi, Takarazuka-shi, Hyogo-ken, 665-0876 (JP); Sakata, Toshiyuki, Osaka-shi, Osaka-fu, 530-0021 (JP); Michimoto, Shohei, Takatsuki-shi, Osaka-fu, 569-0081 (JP)
(74) Representative: Crawford, Andrew Birkby

(56) References cited:
- EP-A- 1 016 961
- EP-A- 1 026 581
- WO-A-00/45282
- US-A- 4 873 627
- US-A- 5 815 695

## Description

### BACKGROUND OF THE INVENTION

### Field of the Invention

The present invention relates to a processor and a program conversion technique that contribute to reduction of the sizes of the programs and reduction of processing time by improving the parallelism of execution.

### Description of the Related Art

Conventionally, such processors have been put to practical use in which program execution time is reduced by executing a plurality of instructions in parallel with use of the pipelining method. A processor in which the pipelining method is used comprises circuits that are capable of working in parallel and process each of a plurality of stages respectively, such as supplying instructions, decoding instructions, and executing instructions. The processor is therefore capable of concurrently process a plurality of instructions in parallel in different stages.

There are other kinds of processors in which the VLIW (Very Long Instruction Word) method or the superscalar method is used in order to reduce the execution time. A processor of these kinds comprises, for each of the stages, a plurality of circuits that are capable of working in parallel. The processor is therefore capable of concurrently process a plurality of instructions in one stage.

In a processor in which the pipelining method is used, one of the causes of ruining the effects of reducing the execution time is conditional branch instructions. When a conditional branch instruction is processed, processing of the next instruction is suspended until the branch destination is determined. Then, the circuit that processes the upper stage waits. This waiting is the cause of hindering the reduction of the execution time. Even if succeeding instructions are executed as speculation according to a result of a branch prediction, when the branch prediction turns out to be wrong, the reduction of the execution time is hindered because the correct instructions need to be processed thereafter.

In a processor in which the superscalar method is used, the number of instructions that can be concurrently processed in parallel is large; therefore, the frequency of processing conditional branch instructions is higher, and thus such influence of the conditional branch instructions is larger.

In order to solve the problem that reduction of the execution time is hindered by conditional branch instructions, some conventional processors have functions to process conditional instructions. The "conditional instruction" denotes an instruction to which execute-condition information is attached, the execute-condition information indicating a condition for rendering the original practical effect when the instruction is processed.

When processing a conditional instruction, such a processor cancels an operation result or suspends the transfer of the data according to the execute-condition information, so that the instruction is nullified and does not render the practical effect.

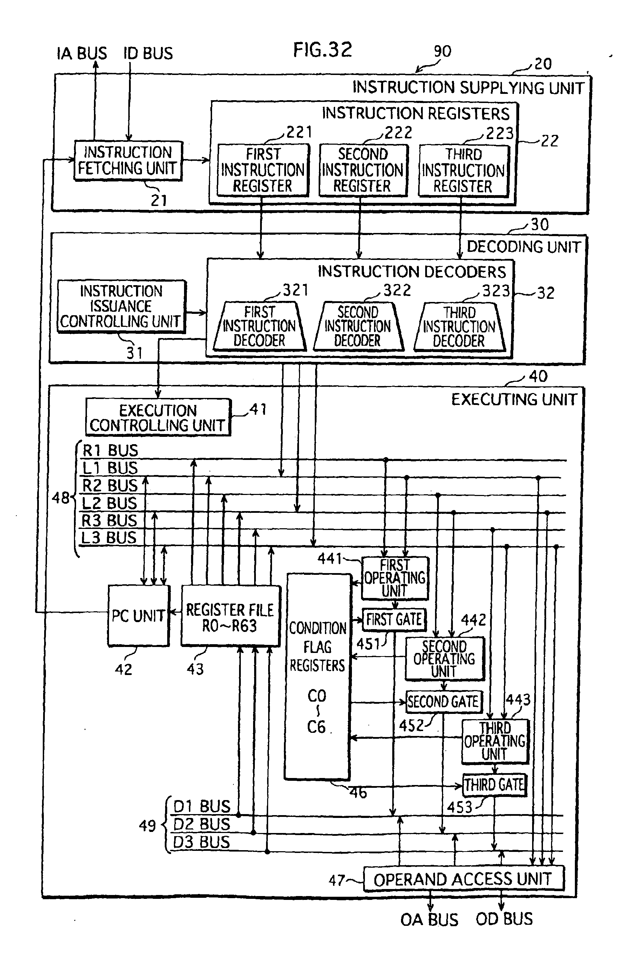

FIG. 32 is a block diagram that indicates a typical example of the structure of such a processor. The processor 90 comprises an instruction supplying unit 20, a decoding unit 30, an executing unit 40 that each operate in synchronization with clock signals, and are capable of processing in parallel each of the stages of supplying instructions, decoding instructions, and executing instructions in each cycle of the clock signals. Each unit processes in parallel three instructions at maximum in a single clock cycle.

A compiler whose target is the processor 90 determines in advance a plurality of instructions in the program each of which the processor 90 is capable of executing in parallel, and attaches, to the program, parallel execution boundary information that indicates such instructions. The processor 90 recognizes those instructions to be executed in parallel according to the parallel execution boundary information, and processes in parallel each of the instructions at each stage in each clock cycle.

The instruction supplying unit 20 comprises an instruction fetching unit 21 and instruction registers 22 which include a first instruction register 221, a second instruction register 222, and a third instruction register 223.

The decoding unit 30 comprises an instruction issuance controlling unit 31 and instruction decoders 32 which include a first instruction decoder 321, a second instruction decoder 322, a third instruction decoder 323.

The executing unit 40 comprises an execution controlling unit 41, a PC (program counter) unit 42, a register file 43, a first operating unit 441, a second operating unit 442, a third operating unit 443, a first gate 451, a second gate 452, a third gate 453, a condition flag register 46, an operand access unit 47, data buses 48, and data buses 49.

In the instruction supplying unit 20, the instruction fetching unit 21 reads a predetermined number of instructions from an external memory that is not shown in the drawing via the IA (Instruction Address) bus and the ID (Instruction Data) bus, and stores them therein. The instruction fetching unit 21 also has the first, second, and third instruction registers 221 to 223 store instructions that are in a range that is shown, by the parallel execution boundary information, to be executable in parallel starting with an instruction indicated by an address provided by the PC unit 42.

In the decoding unit 30, under the control of the instruction issuance controlling unit 31, the first, second, and third instruction decoders 321 to 323 each output a controlling signal to the execution controlling unit 41 so that the instructions stored in the first, second, and third instruction registers 221 to 223 are executed, as well as output constant operands included in the instructions to the data buses 48.

In the executing unit 40, the execution controlling unit 41 has each of the components of the executing unit 40 operate on the basis of the control signals provided by the first, second, and third instruction decoders 321 to 323. The PC unit 42 outputs, to the instruction fetching unit 21, the address of the instruction to be processed next.

The register file 43 is made up of sixty-four general registers, R0 to R63. The general registers output the stored values to the first, second, and third operating units 441 to 443 via the data buses 48 according to the control by the execution controlling unit 41, as well as store therein data provided via the data buses 49.

The first, second, and third operating units 441 to 443 each include: an ALU (Arithmetic Logical Unit) that performs arithmetic logical operation; a multiplier; a barrel shifter that performs shift operation, and the like that are not shown in the drawing. The first, second, and third operating units 441 to 443 either perform operation on the inputted data or simply let the inputted data pass, according to the control by the execution controlling unit 41. As a result of the operation or the passing, the inputted data will be outputted to the first, second, and third gates 451 to 453, and particularly, the result of a comparison operation performed according to a compare instruction will be outputted to a condition flag register 46.

The condition flag registers 46 are made up of seven registers, C0 to C6. The condition flag registers each store therein values provided by the first, second, and third operating units 441 to 443, according to the control by the execution controlling unit 41, as well as output each of the stored values to the first, second, and third gates 451 to 453.

When each of the values provided by the condition flag registers 46 is a TRUE value, the first, second, and third gates 451 to 453 each output the results of operation provided by the first, second, and thirdoperatingunits 441 to 443 to the register file 43 via the data buses 49. When each of the values is a FALSE value, the first, second, and third gates 451 to 453 each cancel the results of operation.

The operand access unit 47 transfers, according to the control by the execution controlling unit 41, the data provided by the register file 43 via the data buses 49 to an external memory that is not shown in the drawing, via the OA (Operand Address) bus and the OD (Operand Data) bus, as well as transfers the data stored in the external memory to the register file 43.

With such an arrangement, the processor 90 is capable of actualizing a conditional instruction that renders the practical effect only if the value stored in each of the condition flag registers is a TRUE value. Such a conditional instruction has the same meaning as "a conditional instruction that is nullified when the value is a FALSE value".

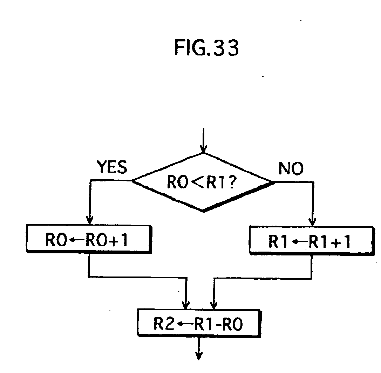

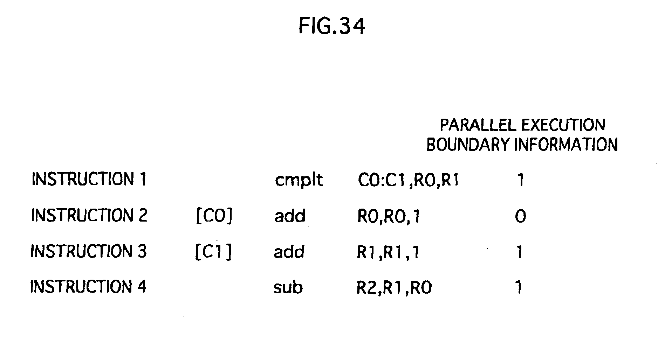

By using a conditional instruction, it is possible to execute the conditional process shown in the flow chart in FIG. 33, for example, according to the program shown in FIG. 34 which is in a form that does not employ a conditional branch instruction .

In the program shown in FIG. 34, the first column on the left shows instruction numbers, the second column shows the execute-condition information, the third column shows instruction mnemonics, the fourth column shows operands, and the fifth column shows the parallel execution boundary information.

The execute-condition information indicates a condition flag register to be the execute-condition. When no condition flag register is indicated, it means that the instruction is an unconditional instruction.

The parallel execution boundary information is specifically a parallel execution boundary flag value attached to each instruction. When the value is 0, it means that the instruction is executable in parallel with the next instruction. When the value is 1, it means that the instruction is not executable in parallel with the next instruction.

It should be noted that the execute-condition information, the instruction mnemonics, the operands, and the parallel execution boundary information are described according to predetermined formats in the computer resources; however, the formats are not the main objects of the present invention, and thus, explanation will be omitted.

The instruction 1 is an instruction for comparing the contents of the register R0 and the contents of the register R1. In a case where R0<R1 is satisfied, the condition flag registers C0 and C1 store a TRUE value and a FALSE value, respectively. In other cases, the condition flag registers C0 and C1 store a FALSE value and a TRUE value, respectively.

[C0] and [C1] written at the head of the instruction 2 and the instruction 3 indicate that these instructions are conditional instructions that each render practical effects when the values stored in the condition flag registers C0 and C1 are TRUE values. In this example, in a case where r0<r1 is satisfied, the instruction 2 renders the practical effect and the instruction 3 is nullified, whereas in other cases the instruction 2 is nullified and the instruction 3 renders the practical effect.

Using conditional instructions in this way, the processor 90 is capable of executing conditional process according to a program which is in a form that does not employ a conditional branch instruction. Thus, it is possible to solve the problem that reduction of the execution time is hindered by conditional branch instructions.

A program in a form that does not employ a conditional branch instruction can be written with a smaller number of instructions than a program in a form that includes a conditional branch instruction; it is therefore possible to further achieve an effect of reducing the size of the program.

The processor 90 of the prior art, however, once stores, in the condition flag registers, the results of comparison operation performed in a predetermined clock cycle according to compare instructions, and then reads the stored results and nullifies the conditional instruction in the following clock cycle or later; therefore, the processor has a restriction in the sense that it is not capable of executing in parallel, in a same clock cycle, a compare instruction and a conditional Instruction whose execute-condition is a condition flag calculated according to the compare instruction.

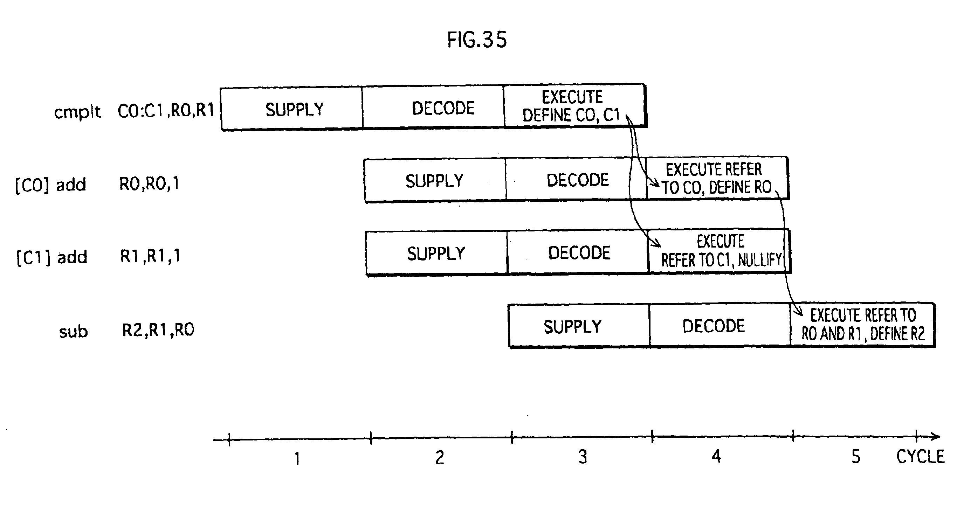

Consequently, a conventional compiler whose target is the processor 90 attaches, to the program, parallel execution boundary information that indicates that those instructions cannot be executed in a same clock cycle. For example, as for the program in FIG. 34, the parallel execution boundary flag of the instruction 1 is set as 1, so that the instruction 1 and the instruction 2 will not be processed in a same clock cycle, and the instruction 1 and the instruction 3 will not be processed in a same clock cycle. As a result, the processor 90 executes the instruction 1 in the program of FIG. 34 alone. FIG. 35 is a timing chart at the time when the processor 90 executes this program, and shows the clock cycle at each of which a stage of each instruction is processed.

US 5815695 discloses a method and apparatus for conditionally nullifying a current instruction based on a first test value where the first test value can be set in one or more prior instructions, and where execution of the current instruction can set a second test value without affecting the first test value.

WO 00/45282 discloses methods and apparatus to support conditional execution in a VLIW-based array processor with subword execution, attempting to avoid a sequential series of conditional branches based on complex conditions, such that complex conditions can be used for conditional execution and such that conditional operation parallelism can be varied. Multiple professing elements can generate
condition information at the same time and a programmer can specify a conditional execution in one processor based upon a condition generated in a different processor.

The brief disclosure within US 4873627 refers to a method and device for conditional storing of data in a reduced instruction set computer (RISC) system. An instruction set uses a two instruction sequence to store the result of a comparison. The two instruction sequence uses no branch instructions, and does not wait for condition resolution before storing results.

European patent application publication No. EP 1026581 discloses a system and method for controlling program execution for a processor using pipelining to suppress the occurrence of branch instructions. The execution control instruction contains a condition field for specifying an execution condition and an instruction-specifying field for defining the number of instructions to be executed only conditionally.
In response to the execution control instructions, a nullification controller decides whether or not the execution condition specified by the condition field is satisfied. Based on the outcome of this decision, the controller determines whether or not that number of instructions, which has been defined by the instruction-specifying field for instructions succeeding the execution control instruction, should be nullified. The started intention is that a large number of succeeding instructions are executed conditionally using an execution control instruction of a short word length.

EP 1016961 discloses an information processor that can employ a conditional instruction of a predicated execution function, instead of a conditional branch instruction with multiple conditions, with the objective of improved processor performance.

A first problem of the conventional processor is that, since the processor is not capable of executing in parallel a compare instruction and a conditional instruction whose execute-condition is a condition flag calculated according to the compare instruction, it is impossible to reduce the execution time by such parallel execution.

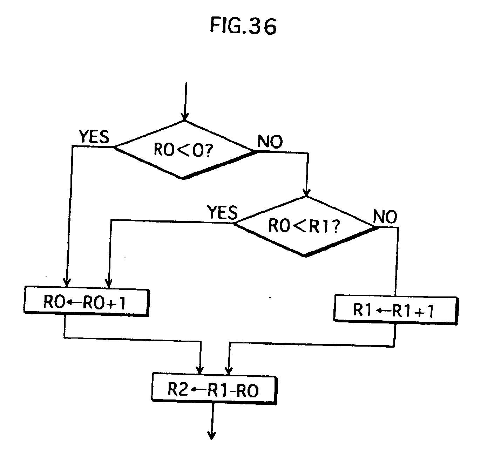

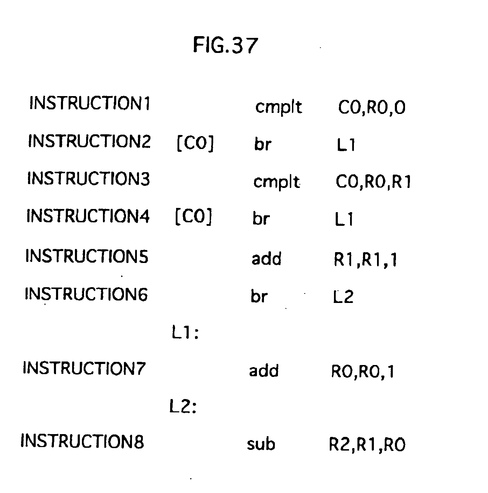

The conventional compiler whose target is the processor 90 generates, with respect to a combined conditional process that is performed by combining a plurality of results of comparison, a program in which the control is branched according to the results of each comparison. As a specific example, in order to execute the combined conditional process shown in the flow chart of FIG. 36, the compiler generates the program shown in FIG. 37.

Here, conditional branch instructions which are of disadvantage in terms of the program's size and execution time are used because when a program for executing a combined conditional process is described with an effort to avoid using conditional branch instructions, the number of instructions would increase instead, and it does not help to achieve the original object of reducing the size of the program and execution time, which is why efforts are made to exclude the conditional branch instructions, to begin with.

As so far explained, there is a second problem that it is difficult to describe a program in a small size for having a conventional processor execute a combined conditional process in a reduced time.

### SUMMARY OF THE INVENTION

In view of the problems mentioned above, the object of the present invention as set out in claim 1 is to provide a processor that is capable of executing in parallel a compare instruction and a conditional instruction whose execute-condition is a condition flag calculated according to the compare instruction, and also executing a combined conditional process with a program smaller in size than conventional programs and in a fewer clock cycles than in the prior art, as well as to provide a compiler that generates a program targeting such a processor.
(1) The present invention provides a processor a processor comprising: a first operating unit operable to calculate a logical value that indicates whether a plurality of operands satisfy a first comparison condition; and a condition flag operating unit operable to calculate a first condition flag value by performing a logical operation on (a) the logical value and (b) a second condition flag value that indicates whether a plurality of operands satisfy a second comparison condition.

With this arrangement, the condition flag operating unit is capable of calculating the first condition flag value according to a particular compare instruction provided in an instruction set of the processor. The first condition flag value indicates whether a combined comparison condition is satisfied or not, the combined comparison condition being defined by combining the first comparison condition and the second comparison condition.

In other words, the processor is capable of directly executing calculation of the condition flag value that indicates whether the combined comparison condition is satisfied, according to the program that includes the particular compare instruction and does not include a conditional branch instruction . This program is, as will be explained in the embodiment, made up of a fewer number of instructions than a conventional program aiming at obtaining the same effects, and is executable by the processor in a fewer clock cycles.

Consequently, the processor is able to reduce the size of the program for evaluating whether a combined comparison condition is satisfied and to reduce the execution time.

The processor may further comprise a condition flag register storing therein the second condition flag value, wherein the first operating unit calculates the logical value before a point of time partway through a clock cycle, and the condition flag operating unit calculates, before the clock cycle ends, the first condition flag value by performing the logical operation on the logical value and the second condition flag value that has been read from the condition flag register.

This arrangement is suitable when the second condition flag value has been calculated through execution of another compare instruction before the particular compare instruction is executed, and has already been stored in the condition flag register.

The processor may further comprise a second operating unit operable to calculate the second condition flag value before a point of time partway through a clock cycle, wherein the first operating unit calculates the logical value, before the point of time, and the condition flag operating unit calculates, before the clock cycle ends, the first condition flag value by performing the logical operation on the logical value and the second condition flag value.

With this arrangement, the processor is capable of executing in parallel in a same clock cycle (i) the particular compare instruction for having the condition flag operating unit calculate the first condition flag value and (ii) another compare instruction for having the second operating unit calculate the second condition flag value.

Consequently, the parallelism is improved at times when the processor executes the program for evaluating whether the combined comparison condition is satisfied, and thus it further helps to reduce the execution time.

The condition flag operating unit may have an arrangement wherein the condition flag operating unit further calculates, before the clock cycle ends, a third condition flag value which is a logical NOT value of the first condition flag value.

With this arrangement, the condition flag operating unit is able to calculate the first condition flag value and the third condition flag value according to a particular compare instruction provided in an instruction set of the processor.

The processor is capable of executing a conditional process of the if-then-else style according to a program that includes (a) the particular compare instruction for executing the if part, followed by (b) one or more conditional instructions that are for executing the then part and are to be nullified according to the first condition flag value, and (c) one or more conditional instructions that are for executing the else part and are to be nullified according to the third condition flag value. It is possible to describe this program, too, without using a conditional branch instruction; therefore, it helps to reduce the size of the program and the execution time.

The condition flag operating unit may have an arrangement wherein the condition flag operating unit further calculates, before the clock cycle ends, a logical NOT value of the logical value and a fourth condition flag value by performing a logical operation on the logical NOT value and the second condition flag value.

With this arrangement, the condition flag operating unit is able to calculate the first condition flag value and the fourth condition flag value, according to a particular compare instruction provided in an instruction set of the processor.

When the logical operation is a logical AND operation, and the second condition flag value denotes an execute-condition of an outer conditional process, the first and fourth condition flag values calculated here respectively denote an execute-condition of the then part and the else part of an inner conditional process described as nesting the outer conditional process.

The processor is capable of executing the inner conditional process according to a program that includes (a) the particular compare instruction for executing the inner if part, followed by (b) one or more conditional instructions that are for executing the inner then part and are to be nullified according to the first condition flag value, and (c) one or more conditional instructions that are for executing the inner else part and are to be nullified according to the fourth condition flag value. It is possible to describe this program, too, without using a conditional branch instruction; therefore, it helps to reduce the size of the program and the execution time.
(2) The present invention further provides a processor comprising: a condition flag operating unit operable to calculate, before a point of time partway through a clock cycle, a first condition flag value based on a logical value that indicates whether a plurality of operands satisfy a first comparison condition; a first operating unit operable to perform an operation, during the clock cycle, according to a conditional instruction; and a nullifying unit operable to nullify, before the clock cycle ends, a result of the operation performed by the first operating unit, according to the first condition flag value.

With this arrangement, the processor is capable of executing in parallel in a same clock cycle (i) a compare instruction for having the condition flag operating unit calculate the first condition flag value and (ii) the predetermined conditional instruction. The processor is also capable of nullifying the predetermined conditional instruction according to the first condition flag value in the same clock cycle.

In other words, the processor is able to execute in parallel the compare instruction for executing the if part of the conditional process and the predetermined conditional instruction for executing the then part.

Consequently, the processor is able to achieve reduction of the execution time of the program for executing a conditional process by improving the parallelism of the execution.

The processor may further comprise a condition flag register that stores therein a second condition flag value that indicates whether a plurality of operands satisfy a second comparison condition, wherein the condition flag operating unit calculates, before the point of time, the first condition flag value by performing a logical operation on the logical value and the second condition flag value that has been read from the condition flag register.

This arrangement is suitable when the second condition flag value has been calculated through execution of another compare instruction before the compare instruction is executed, and has already been stored in the condition flag register.

The processor may further comprise a second operating unit operable to calculate, before the point of time, a second condition flag value that indicates whether a plurality of operands satisfy a second comparison condition, wherein the condition flag operating unit calculates, before the point of time, the first condition flag value by performing a logical operation on the logical value and the second condition flag value.

With this arrangement, the processor is able to execute in parallel in a same clock cycle the compare instruction and another compare instruction for having the second operating unit calculate the second condition flag value. Thus, even if the first condition flag value indicates whether a combined comparison condition is satisfied, it is possible to calculate it in one clock cycle and further nullify the predetermined conditional instruction in that clock cycle.

In other words, the processor is able to reduce, by improving the parallelism of execution, the execution time of a program for performing a combined conditional process as well.

The processor may have an arrangement wherein the condition flag operating unit further calculates, before the point of time, a third condition flag value which is a logical NOT value of the first condition flag value, and the nullifying unit nullifies, before the clock cycle ends, the result of the operation according to either the first condition flag value or the third condition flag value.

With this arrangement, it is possible to obtain the first condition flag value that indicates whether the comparison condition is satisfied and the third condition flag value that indicates a logical NOT value of the first condition flag value. Consequently, the processor is able to reduce, by improving the parallelism of the execution, the execution time of a program in which the predetermined conditional instruction is used for execution of the else part of the conditional process.

The processor may have an arrangement wherein the condition flag operating unit further calculates, before the point of time, a logical NOT value of the logical value and a fourth condition flag value by performing a logical operation on the logical NOT value and the second condition flag value, and the nullifying unit nullifies, before the clock cycle ends, the result of the operation according to either the first condition flag value or the fourth condition flag value.

With this arrangement, it is possible to obtain the first condition flag value and the fourth condition flag value respectively indicating the execution-condition of the then part and the else part of the inner conditional process described as nesting. Thus, the processor is able to reduce, by improving the parallelism of the execution, the execution time of a program in which the predetermined conditional instruction is used for the execution of one of the then part and the else part of the inner conditional process.
(3) The present invention provides a program conversion method comprising: an identifying step of identifying, in a program to be converted, a first part and a second part, the first part describing a process for evaluating whether a first comparison condition is satisfied, and the second part describing a process to be executed when the first comparison condition is either satisfied or not satisfied; a first conversion step of converting the first part into a first instruction sequence that includes an instruction for calculating a first condition flag value that indicates whether the first comparison condition is satisfied and does not include a branch instruction; and a second conversion step of converting the second part into a second instruction sequence that includes a conditional instruction to be nullified according to the first condition flag value and does not include a branch instruction.

With this arrangement, it is possible to convert a program for performing a conditional process into an instruction sequence that is for performing the conditional process and does not include a conditional branch instruction.

This instruction sequence is, as will be explained in the embodiment, made up of a fewer number of instructions than a conventional instruction sequence into which the same program is converted, and is executable by the processor in a fewer clock cycles; therefore, it is possible to reduce the size of the instruction sequence after the conversion, as well as reduce the execution time.

The conversion method may have an arrangement wherein the identifying step further identifies, in the program to be converted, a third part that describes a process to be executed when an evaluation result of whether the first comparison condition is satisfied is opposite to an evaluation result that designates that the second part should be executed, the first conversion step converts the first part into an instruction sequence that (i) includes an instruction for calculating the first condition flag value and a second condition flag value which is a logical NOT value of the first condition flag value and (ii) does not include a branch instruction, and the program conversion method further comprises a third conversion step of converting the third part into an instruction sequence that includes a conditional instruction to be nullified according to the second condition flag value and does not include a branch instruction.

With this arrangement, it is possible to convert a program for performing a conditional process of the if-then-else style into an instruction sequence that is for performing the conditional process and does not include a conditional branch instruction; therefore, it is possible to achieve reduction of the size of the instruction sequence after the conversion and reduction of the execution time.

The conversion method may have an arrangement wherein the first conversion step converts, when the first part is described so as to be in conjunct of a plurality of processes for evaluating whether each comparison condition is satisfied, the first part into the first instruction sequence by performing a logical operation on logical values that each indicate an evaluation result of each comparison condition.

With this arrangement, it is possible to convert a program for performing a combined conditional process into an instruction sequence that is for performing the conditional process and does not include a conditional branch instruction. Thus, it is possible to achieve reduction of the size of the instruction sequence after the conversion and reduction of the execution time.

The conversion method may have an arrangement wherein the identifying step further identifies, in the second part, a fourth part that describes a process for evaluating whether a second comparison condition is satisfied, and the second conversion step further converts the fourth part into an instruction sequence that (i) includes an instruction for calculating a third condition flag value by performing a logical operation on a logical value that indicates whether the second comparison condition is satisfied and the first condition flag value and (ii) does not include a branch instruction.

The conversion method may have an arrangement wherein the identifying step further identifies, in the third part, a fifth part that describes a process for evaluating whether a third comparison condition is satisfied, and the third conversion step further converts the fifth part into an instruction sequence that (i) includes an instruction for calculating a fourth condition flag value by performing a logical operation on a logical value that indicates whether the third comparison condition is satisfied and the second condition flag value and (ii) does not include a branch instruction.

With these arrangements, it is possible to obtain, with respect to an inner conditional process that is described as nesting an outer conditional process, an instruction sequence for calculating a condition flag value which indicates that the inner execute-condition is not satisfied when the outer execute-condition is not satisfied.

By using a conditional instruction whose execute-condition is this condition flag value, it is possible to convert the program for performing the nesting conditional process into an instruction sequence that does not include a conditional branch instruction; therefore, it is possible to achieve reduction of the size of the instruction sequence after the conversion and reduction of the execution time.
(4) The present invention further provides a program conversion method wherein a processor that is targeted by the program conversion method is capable of executing in parallel (i) a calculation process of a condition flag value instructed by a first compare instruction and (ii) a process that is instructed by a second instruction and is performed by referring to the condition flag value, and the program conversion method comprises: an identifying step of identifying, in a program to be converted, (a) the first compare instruction, (b) a third instruction that is located later in the program than the first compare instruction and is not executable in parallel with the first compare instruction by the processor, and (c) the second instruction that is located later in the program than the third instruction; and a rearranging step of swapping the second instruction and the third instruction.

The program conversion method may have an arrangement wherein the identifying step identifies, as the second instruction, one or both of (a) a compare instruction for calculating another condition flag value by performing a logical operation on a logical value that indicates whether a comparison condition is satisfied and the condition flag value and (b) a conditional instruction to be nullified according to the condition flag value.

With these arrangements, the instructions that are executable in parallel by the processor will be consecutively arranged with the condition flag dependence taken into consideration. Thus, the parallelism of the execution will be improved when the processor executes the instruction sequence after the conversion, and the execution time of the program therefore will be reduced.

The program conversion method may further comprise a boundary information generating step of generating parallel execution boundary information that indicates it is possible to execute the first compare instruction in parallel with the second instruction after the rearrangement.

With this arrangement, instructions that are executable in parallel are indicated with the parallel execution boundary information; therefore, it is possible to largely simplify some of the circuits included in the processor that are for determining instructions that are executable in parallel.
(5) The present invention further provides a program conversion apparatus comprising: an identifying unit operable to identify, in a program to be converted, a first part and a second part, the first part describing a process for evaluating whether a first comparison condition is satisfied, and the second part describing a process to be executed when the first comparison condition is either satisfied or not satisfied; a first conversion unit operable to convert the first part into a first instruction sequence that includes an instruction for calculating a first condition flag value that indicates whether the first comparison condition is satisfied and does not include a branch instruction; and a second conversion unit operable to convert the second part into a second instruction sequence that includes a conditional instruction to be nullified according to the first condition flag value and does not include a branch instruction.

With this arrangement, it is possible to achieve the same effects as with (3) above.

The present invention further provides a program conversion apparatus wherein a processor that is targeted by the program conversion apparatus is capable of executing in parallel (i) a calculation process of a condition flag value instructed by a first compare instruction and (ii) a process that is instructed by a second instruction and is performed by referring to the condition flag value, and the program conversion apparatus comprises: an identifying unit operable to identify, in a program to be converted, (a) the first compare instruction, (b) a third instruction that is located later in the program than the first compare instruction and is not executable in parallel with the first compare instruction by the processor, and (c) the second instruction that is located later in the program than the third instruction; and a rearranging unit operable to swap the second instruction and the third instruction.

The program conversion apparatus may further comprise a boundary information generating unit operable to generate parallel execution boundary information that indicates it is possible to execute the first compare instruction in parallel with the second instruction after the rearrangement.

With these arrangements, it is possible to achieve the same effects as with (4) above.
(6) The present invention provides a computer program for having a computer execute the steps comprised in the program conversion method of Claim 15.

With this arrangement, it is possible to achieve the same effects as with (3) above.

The present invention further provides a computer program for having a computer execute the steps comprised in the program conversion method of Claim 20.

The present invention also provides a computer program for having a computer execute the steps comprised in the program conversion method of Claim 21.

With these arrangements, it is possible to achieve the same effects as with (4) above.

The present invention also provides a recording medium for computer readable programs on which at least one of the computer programs of Claim 15, Claim 20 and Claim 21 is recorded.

With this arrangement, it is possible to actualize a program conversion apparatus that have the same effects as with (3) and (4) above, by having the program recorded in the program recording medium transferred to an intended computer and executed by that computer.

### BRIEF DESCRIPTION OF THE DRAWINGS

These and other objects, advantages and features of the invention will become apparent from the following description thereof taken in conjunction with the accompanyingdrawings which illustrate a specific embodiment of the invention.

In the drawings:
FIG. 1 is a block diagram to illustrate the general structure of the processor 10;
FIG. 2 is a block diagram to illustrate the structure of the executing unit 50;
FIG. 3 is a block diagram to illustrate the structure of the condition flag operating unit 51;
FIG. 4 is a block diagram to illustrate the structure of the logical operation circuit 501;
FIG. 5 is a list of compare instructions executed by the processor 10;
FIG. 6 is a list of compare operations processed by the processor 10;
FIG. 7 shows an example of a format of a compare instruction;
FIG. 8 shows an example of a program for executing a combined conditional process shown in FIG. 36, using the processor 10;
FIG. 9 is a timing chart in detail at an execution stage when the processor 10 executes the program shown in FIG. 8;
FIG. 10 is a block diagram to illustrate the general structure of the compiler apparatus 100;
FIG. 11A shows an example of assembler code information;
FIG. 11B shows a source program corresponding to the assembler code information;
FIG. 12 shows an example of basic block information;
FIGs. 13A to 13F show six styles of if sentences that describe conditional processes;
FIGs. 14A to 14F show assembler code information corresponding to each style of if sentences;
FIGs. 15A to 15F show basic block information corresponding to each assembler code;
FIG. 16 shows reference information used for detection of conditional process parts;
FIG. 17 is a flow chart that shows in detail a comparing and updating process;
FIG. 18 is a flow chart that shows in detail a comparing process;
FIG. 19 is a flow chart that shows in detail a basic block comparing process;
FIG. 20 is a flow chart that shows in detail an updating process;
FIGs. 21A and 21B are flow charts that show in detail a basic block updating process;
FIG. 22 shows an example of assembler code information to which a comparing and updating process is applied;
FIGs. 23A and 23B show examples of basic block information to which comparing and updating processes is applied;
FIG. 24 shows an example of assembler code information to which a comparing and updating process is applied;
FIG. 25 shows an example of basic block information to which a comparing and updating process is applied;
FIG. 26 is a flow chart that shows an instruction scheduling process;
FIG. 27 shows an example of a dependence graph that is schematically expressed;
FIG. 28 is a flow chart that shows in detail a dependence analyzing process;
FIG. 29 is a flow chart that shows in detail an instruction rearranging process;
FIG. 30 shows an example of a dependence graph generated through a dependence analyzing process;
FIG. 31 shows an example of a machine-language instruction sequence generated through an instruction rearranging process;
FIG. 32 is a block diagram that shows an example of a structure of a conventional processor;
FIG. 33 is a flow chart that shows an example of a conditional process;
FIG. 34 shows an example of a program for executing the conditional process shown in FIG. 33, using a conventional processor;
FIG. 35 is a timing chart in a case where a conventional processor executes the program shown in FIG. 34;
FIG. 36 is a flow chart that shows an example of a combined conditional process; and
FIG. 37 shows an example of a program for executing the combined conditional process shown in FIG. 36, using a conventional processor.

### DESCRIPTION OF THE PREFERRED EMBODIMENT

### < 1. Processor >

A processor of the present embodiment is presented with a first technical feature that it is capable of calculating a first condition flag value by performing a logical operation on a second condition flag value and a result value of a comparison operation according to a compare instruction. It is acceptable that the second condition flag value is a value that is read from a condition flag register in a same clock cycle as the one in which the first condition flag value is calculated. Alternatively, it is acceptable that the second condition flag value is a value that is calculated according to another compare instruction that is executable in parallel in that clock cycle.

Also, the processor is presented with a second technical feature that it is capable of, within a single clock cycle, calculating a condition flag value in parallel with execution of a process according to a conditional instruction, and also nullifying the execution result of the conditional instruction according to the condition flag value calculated.

The following describes in detail the processor of the present embodiment with reference to the drawings.

### <1.1 General Structure>

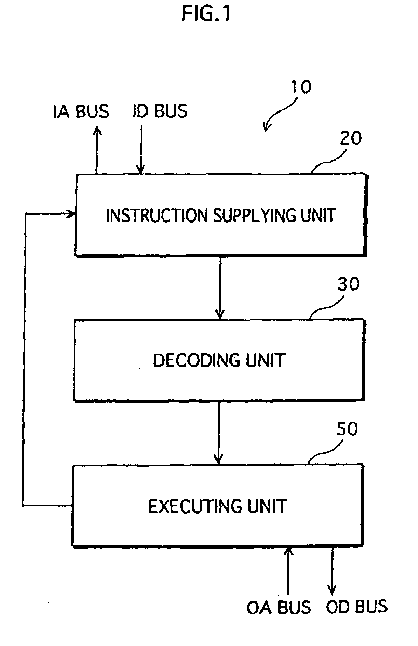

FIG. 1 is a block diagram to illustrate the general structure of the processor of the present embodiment. The processor 10 comprises an instruction supplying unit 20, a decoding unit 30, and an executing unit 50.

The general structure of the processor 10, as well as the instruction supplying unit 20 and the decoding unit 30 are the same as the general structure of the processor 90 of the prior art, the instruction supplying unit 20 and the decoding unit 30; therefore, explanation will be omitted. The explanation below will focus on how the executing unit 50 differs from the conventional executing unit 40 in the processor 90.

### < 1.2 The structure of the executing unit 50 >

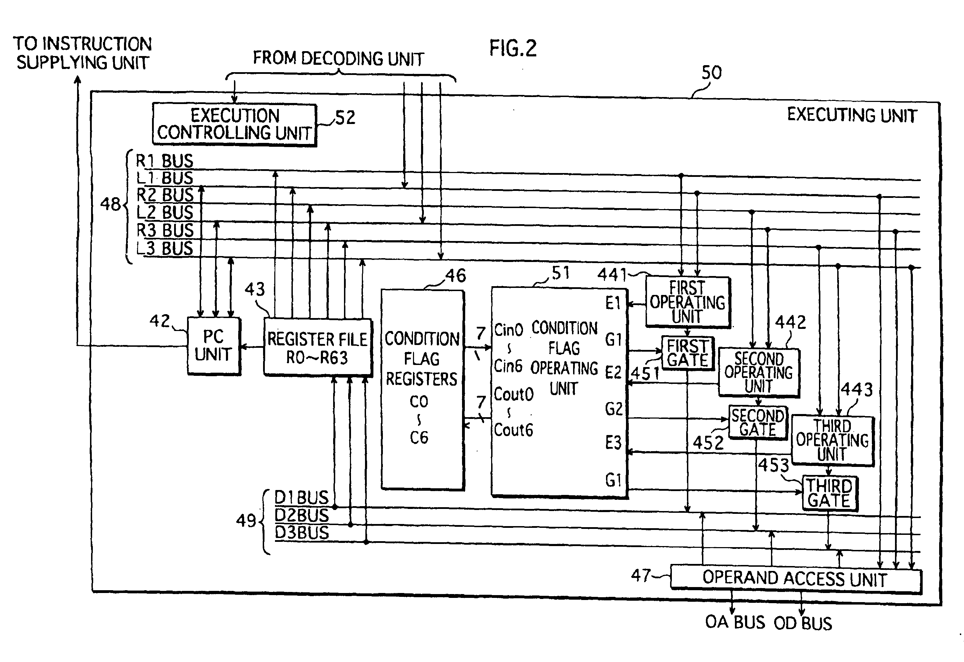

FIG. 2 is a block diagram to illustrate the structure of the executing unit 50. The executing unit 50 comprises, in addition to the components included in the conventional executing unit 40, a condition flag operating unit 51. The components of the executing unit 50 that are the same as the components of the conventional executing unit 40 will be referred to by the same characters, and explanation in detail will be omitted.

Before a predetermined point of time in a clock cycle (hereafter simply referred to as "in the first half of the clock cycle"), the first, second, and third operating units 441 to 443 in the executing unit 50 each perform a predetermined operation on operand data provided via the data buses 48 according to a control signal transmitted from the execution controlling unit 52 . Particularly, when a comparison operation is performed, a TRUE value or a FALSE value as a result will be outputted to the condition flag operating unit 51.

The condition flag operating unit 51, according to a control signal transmitted from the execution controlling unit 52, (a) simply passes a value that is read from a condition flag register 46, or a result value of the comparison operation provided by the first, second, and third operating units 441 to 443, or (b) calculates a new condition flag value by either performing a logical operation on a value that is read from a condition flag register 46 and a result value of the comparison operation provided by the first, second, and third operating units 441 to 443, or performing a logical operation on result values themselves of the comparison operations provided by the first, second, and third operating units 441 to 443.

The condition flag operating unit 51 outputs the value either passed or calculated to the condition flag register 46, and also to a gate among the fist, second, and third gates 451 to 453 that performs a process according to a conditional instruction.

In the remaining second half of the clock cycle, the gate that received the condition flag value from the condition flag operating unit 51, (a) outputs to the register file 43 via the data bus 49 the operation result provided by the corresponding operating unit when the condition flag value is a TRUE value, and (b) cancels the operation result when the condition flag value is a FALSE value.

The condition flag register 46 stores therein the value provided by the condition flag operating unit 51.

### < 1.3 The structure of the condition flag operating unit 51 >

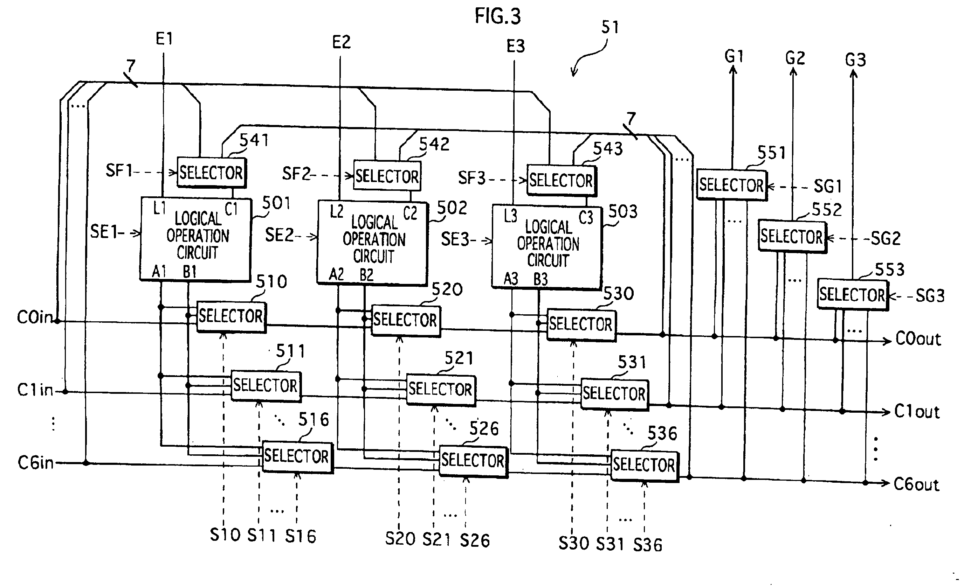

FIG. 3 is a block diagram to illustrate the structure of the condition flag operating unit 51. The condition flag operating unit 51 comprises a logical operation circuits 501 to 503 and selectors 510 to 553.

A control signal is transmitted from the execution controlling unit 52 to each of SF1 to SF3, SE1 to SE3, SG1 to SG3, and S10 to 536.

Values that are read from the condition flag registers C0 to C6 will be inputted to C0in to C6in respectively. The result values of the comparison operations performedby the first, second, and third operating unit 441 to 443 will be inputted to E1, E2, and E3 respectively.

The values that are to be stored in the condition flag registers C0 to C6 will be outputted to C0out to C6out respectively. The values for controlling the first, second, and third gates 451 to 453 will be outputted to G1, G2, and G3 respectively.

The following describes in detail the logical operation circuit 501, the selectors 510 to 516, 541, and 551 that are in charge of processing data corresponding to the first operating unit 441 and the first gate 451.

The selector 541 is provided with a condition flag value that has been calculated in or before the immediately preceding clock cycle and has been stored in one of the condition flag registers C0 to C6, and a condition flag value calculated by the logical operation circuit 502 or 503 in the first half of the current clock cycle. The selector 541 selects one of these values according to the control signal SF1 and outputs it to the logical operation circuit 501.

The logical operation circuit 501 calculates, in the first half of the clock cycle, one or two values obtained by performing a logical operation according to the control signal SE1 on (a) E1 that is a result value of a comparison operation performed by the fist operating unit 441 and (b) C1 that is a value selected by the selector 541. The logical operation circuit 501 then outputs the one or two values to either A1 or A1 and B1. The structure of the logical operation circuits and the logical operations performed by the logical operation circuits will be explained later.

The selectors 510 to 516 are provided in correspondence with the condition flag registers C0 to C6, and selects and outputs any of the values read from A B1, or a corresponding condition flag register, according to the control signals S10 to S16.

The selector 551 is provided with, via the selectors 510 to 516, values that are to be stored in each of the condition flag registers C0 to C6. The selector 551 selects and outputs one of the values according to the control signal SG1.

With the same structure and function, the logical operation circuit 502, and the selectors 520 to 526, 542, and 552 process data corresponding to the second operating unit 442 and the second gate 452. The logical operation circuit 503 and the selectors 530 to 536, 543, and 553 process data corresponding to the third operating unit 443 and the third gate 453.

With these structures, the logical operation circuits 501 to 503 in the condition flag operating unit 51 are each able to calculate, in the first half of a clock cycle, a first condition flag value by performing a logical operation on (a) the second condition flag value and (b) a result value of the comparison operation performed by each of the first, second, and third operating units 441 to 443 according to a compare instruction.

It is acceptable if the second condition flag value is a value that has been calculated in or before the immediately preceding clock cycle and has been stored in one of the condition flag registers C0 to C6. Alternatively, it is acceptable if the second condition flag value is a value that is calculated by another logical operation circuit in the first half of the current clock cycle.

The first condition flag value that has been calculated nullifies, in the second half of the current clock cycle, the result of the operation performed according to a conditional instruction, by controlling one of the first, second, and third gates 451 to 453 that is in charge of processing the conditional instruction, and then will be stored in the condition flag register 46.

### < 1.4 The structure of the logical operation circuit 501 >

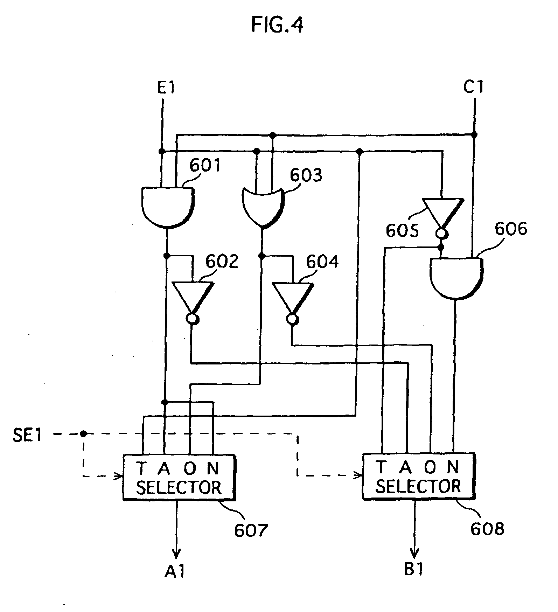

FIG. 4 is a block diagram to illustrate the structure of the logical operation circuit 501. The logical operation circuit 501 comprises a logical AND operating unit 601, a logical NOT operating unit 602, a logical OR operating unit 603, logical NOT operating units 604, 605, a logical AND operating unit 606, and selectors 607, 608.

A result value of a comparison operation performed by the first operating unit 441 will be provided to E1

A value outputted from the selector 541 will be provided to C1 This outputted value is either a value stored in one of the condition flag registers C0 to C6 or a value calculated by the logical operation circuit 502 or 503.

Values selected by the selectors 607 and 608 will be outputted to A1 and B1 respectively.

Hereafter, a logical AND operation, a logical OR operation and a logical NOT operation will be expressed with symbols such as &, | and ∼, respectively.

The logical AND operating unit 601 calculates (E1&C1). The logical NOT operating unit 602 calculates ∼(E1&C1).

The logical OR operating unit 603 calculates (E1|C1). The logical NOT operating unit 604 calculates ∼(E1|C1).

The logical NOT operating unit 605 calculates ∼E1. The logical AND operating unit 606 calculates (∼E1&C1).

The selectors 607 and 608 each select from among the calculated values according to the control signal SE1 and outputs to A1 and B1 according to one of the following (1) to (4).
(1) A1 : E1, B1: ∼E1
(2) A1 : (E1&C1) , B1 : ∼ (E1&C1)
(3) A1 : (E1|C1), B1 : ∼(E1|C1)
(4) A1 : (E1&C1), B1 : (∼E1&C1)

It should be noted that the structures of the logical operation circuits 502 and 503 are the same as that of the logical operation circuit 501.

### < 1.5 Details of an instruction set and a control signal >

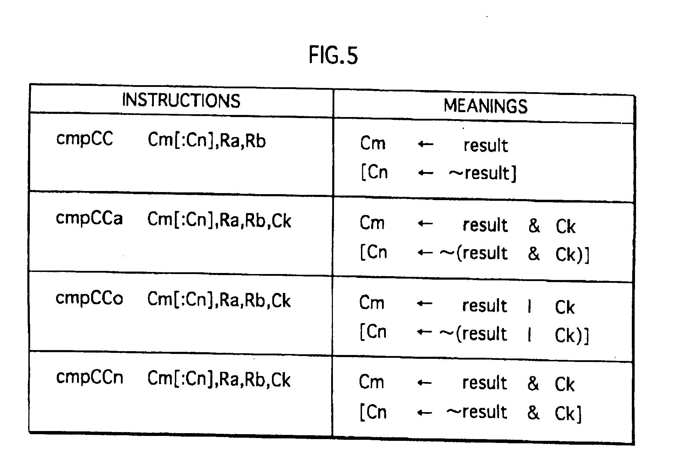

FIG. 5 is a list of compare instructions executed by the processor 10. The "instructions" column shows mnemonics and operands of each instruction. The "meanings" column shows the process performed by the processor 10 according to each instruction.

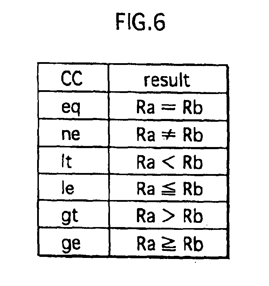

FIG. 6 is a list of comparison operations designated according to the "CC" parts in the mnemonic description.

Hereafter, depending on the context, the condition flag register Cm and a value stored in the condition flag register Cm will be both referred to simply as Cm; the general register Ra and a value stored in the general register Ra will be both referred to simply as Ra.

### < 1. 5. 1 cmpCC instruction >

The cmpCC instruction is a generic term for an instruction in which any of the characters designating a comparison operation listed in FIG. 6 is written in the "CC" part. In each instruction, Cm and Cn as well as Ra and Rb are operands, and Cn may be omitted. Here, each of m and n is a number among 0 to 7 that designates each of the condition flag registers . Each of a and b is a number among 0 to 63 that designates each of the general registers.

According to the cmpCC Cm:Cn, Ra, Rb instruction, the executing unit 50 calculates a result value "result" by performing a comparison operation designated by CC on Ra and Rb. The executing unit 50 then has Cm store the result value "result" and has Cn store a logical NOT value "∼(result)".

This instruction is executed due to a control signal specifically described below that is transmitted from the execution controlling unit 52 in the executing unit 50.

When a clock cycle starts, the execution controlling unit 52 supplies via the data buses 48 values stored in the general registers Ra and Rb to one of the first, second, and third operating units 441 to 443 that is to process the compare instruction. Then, the one of the operating unit to which the values are provided performs the comparison operation designated by CC and outputs the result value obtained to a logical operation circuit corresponding to that operating unit.

Here, explanation is provided on a case where the first operating unit 441 performs the comparison operation and outputs the result to the logical operation circuit 501, as a representative example.

The execution controlling unit 52 gives the logical operation circuit 501 a control signal SE1 for having it output to A1 the result E1 of the comparison operation performed by the first operating unit 441, and having it output to B1 the result from the logical NOT operating unit 605.

The execution controlling unit 52 gives the selectors 51m, 52m, and 53m control signals S1m, S2m, and S3m for selecting the output A1. The execution controlling unit 52 also gives the selectors 51n, 52n, and 53n control signals S1n, S2n, and S3n for selecting the output B1 (Here, each of m and n is a specific number designated by the compare instruction.)

According to the control signals given in such a manner, the values outputted by the selectors 53m and 53n are determined as "result" and "∼(result)" respectively. It is possible to have these outputted values determined in the first half of the clock cycle by arranging the components of the executing unit 50 with elements that satisfy the predetermined propagation delay time.

When the second operating unit 442 executes in parallel, in the clock cycle, a conditional instruction whose execute-condition is either condition flag value Cm or Cn, the selector 552 outputs, in the second half of the clock cycle, the value outputted by the selector 53m or the selector 53n to G2. The second gate 452 controlled according to G2 nullifies the execution result of the conditional instruction. Also, when the third operating unit 443 executes in parallel a conditional instruction whose execute-condition is the condition flag value Cm or Cn, the conditional instruction gets nullified in the same manner.

The condition flag registers Cm and Cn update their contents with the values outputted by the selectors 53m and 53n before the clock cycle ends.

The control signals corresponding to the cmpCC Cm, Ra, Rb instruction are the aforementioned control signals from which control signals related to the output B1 from the logical operation circuit 501 and the condition flag register Cn are omitted.

When the cmpCC instruction is processed by the second operating unit 442 or the third operating unit 443, the same control signals are used to control them.

### < 1.5.2 cmpCCa instruction >

The cmpCCa instruction is a generic term for an instruction in which any of the characters designating a comparison operation listed in FIG. 6 is written in the "CC" part. In each instruction, Cm, Cn, Ck as well as Ra and Rb are operands, and Cn maybe omitted. Here, each of m, n, and k is a number among 0 to 7 that designates each of the condition flag registers. Each of a and b is a number among 0 to 63 that designates each of the general registers.

According to the cmpCCa Cm:Cn, Ra, Rb, Ck instruction, the executing unit 50 calculates a result value "result" by performing a comparison operation designated by CC on Ra and Rb. The executing unit 50 then calculates a logical AND value of the result value "result" and the value of Ck, that is (result&Ck), and has Cm store it. The executing unit 50 also calculates a logical NOT value of it, that is ∼ (result&Ck), and has Cn store it.

Here, Ck is either (a) a value that was calculated according to a compare instruction in a clock cycle in the past and has already been stored in Ck or (b) a value that is calculated in the first half of the clock cycle according to another compare instruction that is executed in parallel in the same clock cycle .

This instruction is executed due to a control signal specifically described below that is transmitted from the execution controlling unit 52 in the executing unit 50.

When a clock cycle starts, the execution controlling unit 52 supplies via the data buses 48 values stored in the general registers Ra andRb to one of the first, second, and third operating units 441 to 443 that is to process the compare instruction. Then, the one of the operating unit performs the comparison operation designated by CC and outputs the result value obtained to a logical operation circuit corresponding to that operating unit.

Here, explanation is provided on a case where the first operating unit 441 performs the comparison operation and outputs the result to the logical operation circuit 501, as a representative example.

The execution controlling unit 52 transmits control signals as follows so that the condition flag value Ck will be led to the C1 input of the logical operation circuit 501.
(a) When the condition flag value Ck is already stored in the condition flag register Ck, the execution controlling unit 52 gives the selectors 51k, 52k, and 53k control signals S1k, S2k, and S3k for simply passing the input into Ckin, and gives the selector 541 a control signal SF1 for selecting the value outputted by the selector 53k.
(b) When the condition flag value Ck is calculated according to another compare instruction that is executed in parallel in the clock cycle and obtained from the logical operation circuit 502 or 503, the execution controlling unit 52 gives the selectors 52k and 53k a control signals for selecting Ck that is obtained, and gives the selector 541 a control signal SF1 for selecting the value outputted by the selector 53k.

Then, the execution controlling unit 52 gives the logical operation circuit 501 a control signal SE1 for having it output to A1 the result from the logical AND operating unit 601, and having it output to B1 the result from the logical NOT operating unit 602.

The execution controlling unit 52 gives the selectors 51m, 52m, and 53m control signals S1m, S2m, and S3m for selecting the output A1. The execution controlling unit 52 also gives the selectors 51n, 52n, and 53n control signals S1n, S2n, and S3n for selecting the output B1. (Here, each of m and n is a specific number designated by the compare instruction.)

According to the control signals given in such a manner, the values outputted by the selectors 53m and 53n are determined as (result&Ck) and ∼(result&Ck) respectively. It is possible to have these outputted values determined in the first half of the clock cycle by arranging the components of the executing unit 50 with elements that satisfy the predetermined propagation delay time.

Nullification of the conditional instruction that is executed in parallel and whose execute-condition is the condition flag value Cm or Cn, as well as updating of the condition flag registers Cm and Cn are performed in the same manner as explained for cmpCC instruction.

The control signals corresponding to the cmpCCa Cm, Ra, Rb, Ck instruction are the aforementioned control signals from which control signals related to the output B1 from the logical operation circuit 501 and the condition flag register Cn are omitted.

When the cmpCCa instruction is processed by the second operating unit 442 or the third operating unit 443, the same control signals are used to control them.

It should be noted that it is acceptable if k is identical with one of m and n . In such a case, the condition flag operating unit 51 reads Ck in the first half of the clock cycle, and calculates a new condition flag value by performing a logical operation on the read Ck and the result of comparison operation. Ck updates its contents with the new condition flag value before the clock cycle ends.

### < 1.5.3 cmpCCo instruction >

The cmpCCo instruction is a generic term for an instruction in which any of the characters designating a comparison operation listed in FIG. 6 is written in the "CC" part. In each instruction, Cm, Cn, Ck as well as Ra and Rb are operands, and Cn may be omitted. Here, each of m, n, and k is a number among 0 to 7 that designates each of the condition flag registers . Each of a and b is a number among 0 to 63 that designates each of the general registers.

According to the cmpCCo Cm:Cn, Ra, Rb, Ck instruction, the executing unit 50 calculates a result value "result" by performing a comparison operation designated by CC on Ra and Rb. The executing unit 50 then calculates a logical AND value of the result value "result" and the value of Ck, that is (result|Ck), and has Cm store it. The executing unit 50 also calculates a logical NOT value of it, that is ∼ (result|Ck), and has Cn store it.

Here, Ck is either (a) a value that was calculated according to a compare instruction in a clock cycle in the past and has already been stored in Ck or (b) a value that is calculated in the first half of the clock cycle according to another compare instruction that is executed in parallel in the same clock cycle.

The control signal transmitted by the execution controlling unit 52 according to this instruction is the same as the control signal explained for the cmpCCa instruction except that the execution controlling unit 52 gives the logical operation circuit a control signal SE1 for having it output to A1 the result from the logical OR operating unit 603, and having it output to B1 the result from the logical NOT operating unit 604.

According to the control signals given in such a manner, the values outputted by the selectors 53m and 53n are determined as (result|Ck) and∼ (result|Ck) respectively in the first half of the clock cycle.

Nullification of the conditional instruction that is executed in parallel and whose execute-condition is the condition flag value Cm or Cn, as well as updating of the condition flag registers Cm and Cn are performed in the same manner as explained for crnpCC instruction.

The control signals corresponding to the cmpCCo Cm, Ra, Rb, Ck instruction are the aforementioned control signals from which control signals related to the output B1 from the logical operation circuit 501 and the condition flag register Cn are omitted.

When the cmpCCo instruction is processed by the second operating unit 442 or the third operating unit 443, the same control signals are used to control them.

It should be noted that it is acceptable if k is identical with one of m and n.

### < 1.5.4 cmpCCn instruction >

The cmpCCn instruction is a generic term for an instruction in which any of the characters designating a comparison operation listed in FIG . 6 is written in the "CC" part. In each instruction, Cm, Cn, Ck as well as Ra and Rb are operands, and Cn may be omitted. Here, each of m, n, and k is a number among 0 to 7 that designates each of the condition flag registers . Each of a and b is a number among 0 to 63 that designates each of the general registers.

According to the cmpCCn Cm:Cn, Ra, Rb, Ck instruction, the executing unit 50 calculates a result value "result" by performing a comparison operation designated by CC on Ra and Rb. The executing unit 50 then calculates (a) a logical AND value of the result value "result" and Ck and (b) a logical AND value of the logical NOT value "∼result" and Ck, that are (result&Ck) and (∼result&Ck), and has Cm store the former, and has Cn store the latter.

Here, Ck is either (a) a value that was calculated according to a compare instruction in a clock cycle in the past and has already been stored in Ck or (b) a value that is calculated in the first half of the clock cycle according to another compare instruction that is executed in parallel in the same clock cycle.

The control signal transmitted by the execution controlling unit 52 according to this instruction is the same as the control signal explained for the cmpCCa instruction except that the execution controlling unit 52 gives the logical operation circuit a control signal SE1 for having it output to A1 the result from the logical AND operating unit 601, and having it output to B1 the result from the logical AND operating unit 606.

According to the control signals given in such a manner, the values outputted by the selectors 53m and 53n are determined as (result&Ck) and (∼result&Ck) respectively in the first half of the clock cycle.

Nullification of the conditional instruction that is executed in parallel and whose execute-condition is the condition flag value Cm or Cn, as well as updating of the condition flag registers Cm and Cn are performed in the same manner as explained for cmpCC instruction.

The control signals corresponding to the cmpCCn Cm, Ra, Rb, Ck instruction are the aforementioned control signals from which control signals related to the output B1 from the logical operation circuit 501 and the condition flag register Cn are omitted.

When the cmpCCn instruction is processed by the second operating unit 442 or the third operating unit 443, the same control signals are used to control them.

It should be noted that it is acceptable if k is identical with one of m and n.

### < 1.5.5 Instruction formats >

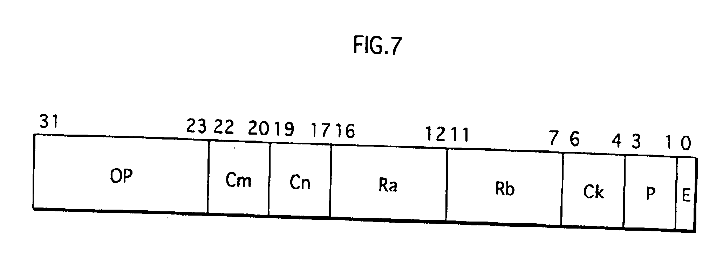

FIG. 7 is an example of a format when each of the aforementioned compare instructions is described on the computer resources.

In this example, one compare instruction is 32-bit long. In each of the fields into which these 32 bits are divided, the instruction code, the operand, the execute-condition information, and the parallel execution boundary information are described. OP is a field in which the instruction code is described; Cm, Cn, Ra, Rb, and Ck are fields in which the operands corresponding to the characters used in the explanation above are described; P is a field in which the execute-condition information is described; E is a field in which the parallel execution boundary information is described. Among these, the fields in which the execute-condition information and the parallel execution boundary information are described, in particular, are provided in common to all instructions including compare instructions.

As for a format for describing a compare instruction, it is not limited to this example of the format. Explanation in detail will be omitted because it is not the main subject of the present invention.

### < 1.6 Specific example of the operation timing >

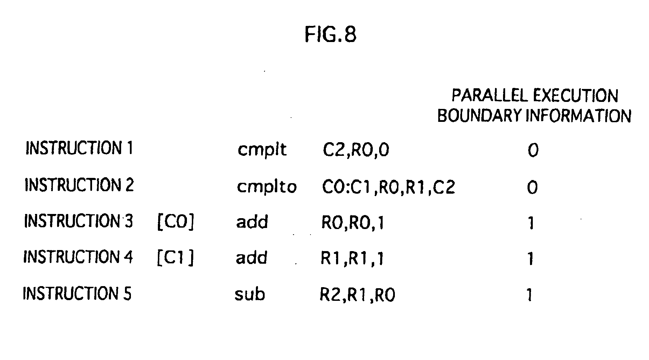

Using the processor 10, it is possible to execute, for example, the combined conditional process shown in the flow chart of FIG. 36 with the program shown in FIG. 8 in a form that does not employ a conditional branch instruction. The following explains in detail the operation timing within the execution stage, in a case where the execution stage of each of the instructions 1 to 3 among these instructions shown in the drawing are executed in parallel in a single clock cycle.

Here, the instruction 1 is a first compare instruction for calculating the condition flag value C2. The instruction 2 is a second compare instruction for calculating the condition flag value C0 and C1 by performing an operation on the condition flag value C2 that is calculated according to the instruction 1. The instruction 3 is a conditional instruction tobe nullified according to the condition flag value C0 that is calculated according to the instruction 2. These instructions are examples of instructions that will be newly executable in parallel by the processor 10.

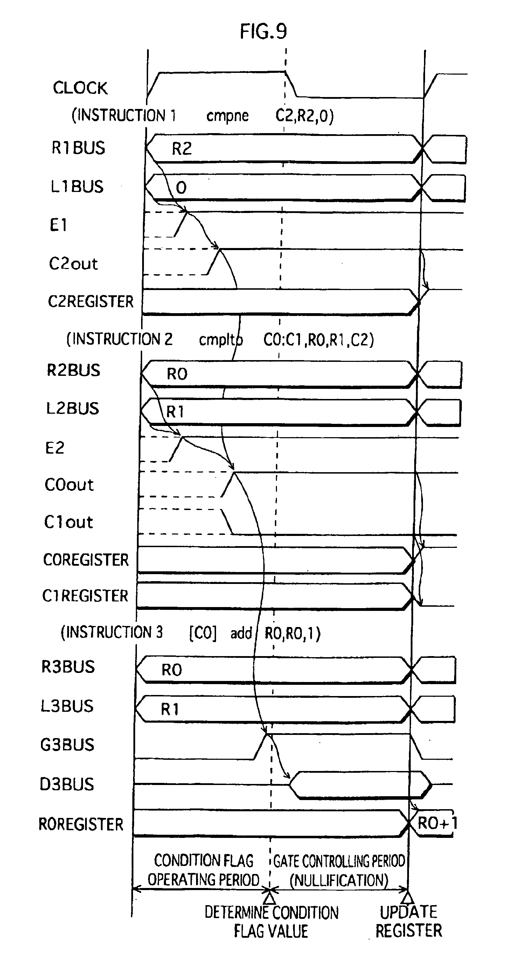

FIG. 9 is an operation timing chart in detail at an execution stage of these instructions. The execution stage is divided into a condition flag operating period in the first half and a gate controlling period in the second half. Explanation will be provided on a premise that the instructions 1, 2, and 3 are processed by the first, second, and third operating unit 441, 442, and 443 respectively.

In the execution stage, a process mentioned below takes place according to the control signal transmitted by the execution controlling unit 52.

The contents of the register R2 will be outputted to R1 bus; the immediate operand value 0 included in the instruction 1 will be outputted to L1 bus; and the first operating unit 441 performs a comparison operation (R2≠0).

The contents of the register R0 will be outputted to R2 bus; the contents of the register R1 will be outputted to L2 bus; and the second operating unit 442 performs a comparison operation (R0<R1).

The contents of the register R0 will be outputted to R3 bus; the immediate operand value 1 included in the instruction 3 will be outputted to L3 bus; and the third operating unit 443 performs an arithmetic addition operation (R0+1).

These operations are concurrently executed in parallel by these operating units. Before a predetermined point of time during the condition flag operating period, E1 and E2 are determined, E1 being a result value of the comparison operation (R2≠0), and E2 being a result value of the comparison operation (R0<R1).

The value of E1 simply passes through the logical operation circuit 501, and will be outputted to A1, be selected by the selectors 512, 522, and 532, and be outputted to C2out, as well as be selected by the selector 542 and be inputted into the logical operation circuit 502.

The logical operation circuit 502 outputs (E2|C2out) and ∼(E2|C2out) to A2 and B2 respectively. The selectors 520 and 530 select A2, and the selectors 521 and 531 select B2. Before the condition flag operation period ends, these selectors each output what is selected to C0out and C1out.

During the gate controlling period, the value of C0out will be selected by the selector 553 and be provided to the third gate 453. Because C0out is a TRUE value, the value (R0+1) that is calculated by the third operating unit 443 will be outputted to D3 bus via the third gate 453.

Before the execution stage ends, the condition flag registers C0, C1, and C2 each store the values of C0out, C1out, and C2out. The register R0 stores the value (R0+1) that is outputted to D1 bus.

Here, when C0out is a FALSE value, the calculation result (R0+1) from the third operating unit 443 will be blocked by the third gate 453 and will not be outputted to D3 bus. Thus, the instruction 3 is nullified in this execution stage.

The following needs to be noted here:

In the specific example mentioned here, (a) the second operating unit 442 functions as the first operating unit in Claim 1, and calculates a logical value indicating whether R0<R1 is satisfied according to the instruction 2; (b) the first operating unit 441 functions as the second operating unit in Claim 1, and calculates C2 as the second condition flag value according to the instruction 1; (c) the condition flag operating unit 51 functions as the condition flag operating unit in Claims 1 and 8, and calculates C0 as the first condition flag value, by performing a logical OR operation on the calculated logical value and C2; and (d) the third operating unit 443 functions as the first operating unit in Claim 8.

This specific example, however, does not limit the correspondence between the operating units in Claims and the operating units in the embodiment.

It is apparent from the circuit structures indicated in the embodiment that any of the first, second, and third operating units 441 to 443 is capable of functioning as any of the operating units in the Claims. It is therefore acceptable if a different operating unit from the one mentioned here in this specific example functions as each of the operating units in the Claims, and the present invention includes such different embodiments as well. .

### < 1.7 Summary >

As so far explained, the processor 10 calculates the first condition flag value by performing a logical operation on the second condition flag value and the result value of the comparison operation according to the compare instruction. It is acceptable that the second condition flag value is a value that is read from a condition flag register in a same clock cycle as the one in which the first condition flag value is calculated. Alternatively, it is acceptable that the second condition flag value is a value that is calculated according to another compare instruction that is executable in parallel in that clock cycle.

The processor 10 is capable of, within a single clock cycle, calculating a condition flag value in parallel with execution of a process according to a conditional instruction, and also nullifying the execution result of the conditional instruction according to the condition flag value calculated.

### < 2. Compiler Apparatus >

The compiler apparatus of the present embodiment converts a program describing a conditional process into an instruction sequence that does not include a conditional branch instruction, with the processor 10 mentioned above being a target processor. Further, as long as the execution results are guaranteed to be identical, the compiler apparatus sorts the instructions in the instruction sequence so that the instructions executable in parallel by the target processor are arranged consecutively, as well as generates parallel execution boundary information that indicates those instructions executable in parallel.

The following describes in detail the compiler apparatus of the present embodiment with reference to the drawings.

### < 2. 1 General Structure >

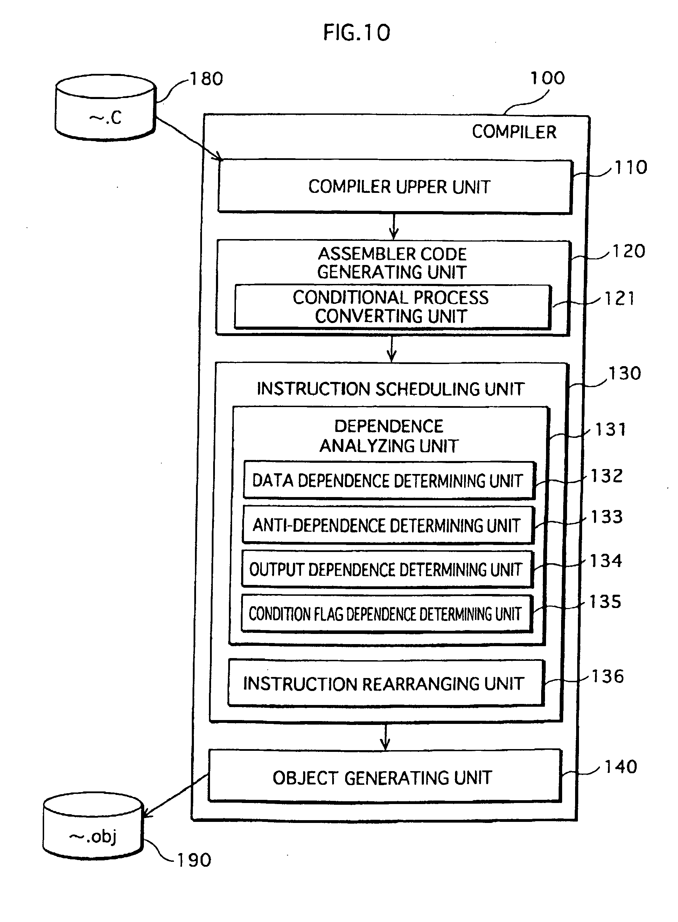

FIG. 10 is a block diagram to illustrate the general structure of the compiler apparatus 100.

The compiler apparatus 100 is a program conversion apparatus that generates a machine-language instruction sequence to be executed by the target processor on the basis of a source program stored in the source file 180, and outputs the machine-language instruction sequence to the object file 190.

In the present embodiment, explanation is provided based on a notion that the source program is written in C language, for instance, and the machine-language instruction sequence is object codes that are to be further processed by a linkage editor and converted into an execute-form program.

The compiler apparatus 100 comprises a compiler upper unit 110, an assembler code generating unit 120, an instruction scheduling unit 130, and an object code generating unit 140.

The assembler code generating unit 120 includes a conditional process converting unit 121; The instruction scheduling unit 130 includes a dependence analyzing unit 131, and an instruction rearranging unit 136; The dependence analyzing unit 131 includes a data dependence determining unit 132, an anti-dependence determining unit 133, an output dependence determining unit 134, and a condition flag dependence determining unit 135.

To be more specific, the compiler apparatus 100 is actualized through software and hardware such as a processor, a ROM (Read Only Memory) storing a program, a RAM (Random Access Memory) for a working area, and a disc device. The functions of the aforementioned components are actualized by the processor's execution of the program stored in the ROM. Data are transferred between the aforementioned components via hardware such as the RAM and the disc device.

The compiler upper unit 110 reads the source program from the source file 180 and generates intermediate codes by performing a lexical analysis process and a syntactic analysis process. These processes performed by the compiler upper unit 110 are of the ordinary technique used in a conventional compiler; therefore explanation in detail will be omitted.

The assembler code generating unit 120 generates, from the intermediate codes generated by the compiler upper unit 110, assembler codes andbasic block information that indicates basic blocks included in the assembler codes.

Here, a "basic block" denotes an instruction sequence that the instructions in it are always executed consecutively from the start of the sequence to the end of the sequence; in other words, there is no branching from an instruction in the sequence to another instruction, and there is no branching from another instruction to an instruction in the sequence.

The assembler code generating unit 120 first generates conventional-style assembler codes in which one or more conditional branch instructions are used for the intermediate codes describing a conditional process, by performing the same process as in a conventional compiler.

Next, the conditional process converting unit 121 converts the conventional-style assembler codes into equivalent assembler codes in which no conditional branch instruction is used. The process performed by the conditional process converting unit 121 will be explained in detail later.

In the instruction scheduling unit 130, the dependence analyzing unit 131determines dependence regarding the execution order of the instructions included in the generated assembler codes. Particularly, the condition flag dependence determining unit 135 determines dependence related to definition and reference of condition flag registers in the target processor. The dependence analyzing unit 131 generates a dependence graph showing dependence that has been determined.

In the dependence analyzing unit 131, the instruction rearranging unit 136 sorts the instructions included in the assembler codes after the conversion, on the basis of the generated dependence graph. The instruction rearranging unit 136 further generates parallel execution boundary information that indicates such instructions that are included in the sorted assembler codes and are executable in parallel. The process performed by the instruction scheduling unit 130 will be explained in detail later.

The object code generating unit 140 generates a machine-language instruction sequence on the basis of the sorted assembler codes and the parallel execution boundary information, and has the object codes including the machine-language instruction sequence recorded onto the object file 190.

The following describes in detail characteristic processes performed by the compiler of the present invention, while explanation on items of the ordinary conventional technique is omitted.

### < 2.2 Details of the assembler code generating unit 120 >

In the assembler code generating unit 120, the conventional-style assembler codes and the basic block information indicating the basic blocks in the assembler codes will be inputted into the conditional process converting unit 121. Such a part of the assembler codes that describes a conditional process will be identified on the basis of the basic block information, and will be converted into equivalent assembler codes that do not include a conditional branch instruction. The basic block information will be updated so that it indicates basic blocks in the assembler codes after the conversion.

The part of the assembler codes that describes a conditional process denotes (a) such a part that describes a process for evaluating whether a condition is satisfied, and (b) such a part that describes a process to be executed when the evaluation result of whether the condition is satisfied is either affirmative or negative. It is further acceptable to include (c) such a part that describes a process to be executed when the evaluation result of whether the condition is satisfied is the opposite.

### < 2. 2. 1 Data structure >

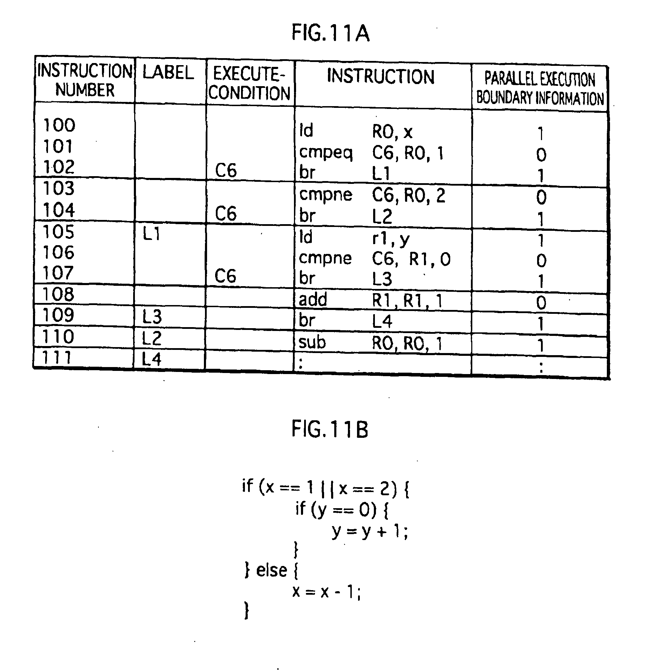

FIG. 11A shows an example of data structure and contents of assembler code information that is to be inputted into the conditional process converting unit 121 and indicates a conventional-style assembler codes. The assembler code information is generated by the assembler code generating unit 120 from the source program shown in FIG. 11B via the intermediate codes.

In the assembler code information shown in FIG. 11A, the instruction number column shows a number to identify each instruction; the label column shows a label to be used when the instruction is referred to as a branch destination or the like; the execute-condition column shows a condition flag that needs to be a TRUE value for the instruction to be able to render a practical effect; the instruction column shows mnemonic description of the instruction; the parallel execution boundary information column shows parallel execution boundary information that is suitable for the aforementioned processor.

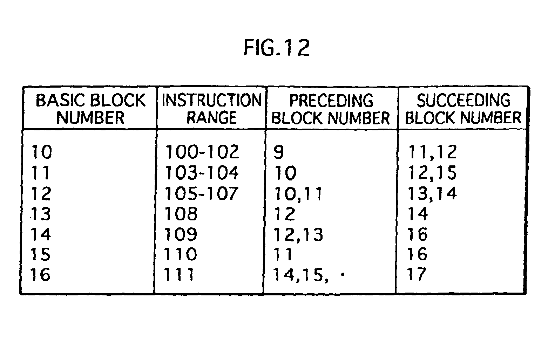

FIG. 12 is an example of data structure and contents of basic block information to be inputted into the conditional process converting unit 121. The basic block information is generated for the assembler code information shown in FIG. 11A by the assembler code generating unit 120.

The basic block number column shows a number to identify each basic block; the instruction range column shows a range of instructions in the assembler code information corresponding to the basic block; the preceding block number column shows a preceding basic block of the basic block with a number; the succeeding block number column shows a succeeding basic block of the basic block with a number. The dot " •" in the preceding block number column denotes a number of a basic block that is not in the drawing.

It should be noted that the dividing lines in FIG. 11A that divide instructions are drawn just for convenience in order to clearly indicate the ranges of instructions indicated by the basic block information in FIG. 12; therefore, the assembler code information actually does not include information that indicates these dividing lines.

### < 2. 2. 2 Details of the conversion target parts >

The conditional process converting unit 121 detects, in the basic block information, a series of basic blocks in which preceding blocks and succeeding blocks occur according to a characteristic pattern that can be observed in such parts that describe conditional processes. Then, the conditional process converting unit 121 identifies such a part of the assembler code information that corresponds to the detected series of basic blocks as a conversion target part.

The following explains six occurrence patterns (or simply referred to as "patterns") of preceding blocks and succeeding blocks which are used in order that the conditional process converting unit 121 detects basic blocks, as well as styles of conditional process from which these patterns are derived.

These six patterns of preceding blocks and succeeding blocks are derived from six styles of conditional processes described in the source program, and are indicated by the basic block information generated by the assembler code generating unit 120.

FIGs . 13A to 13F show six styles of conditional processes . In the source program shown in the drawings, A, B, and C each denote a compare expression (e.g. expressed as "x=y"), and B1, B2, and B3 each denote one or more sentences.

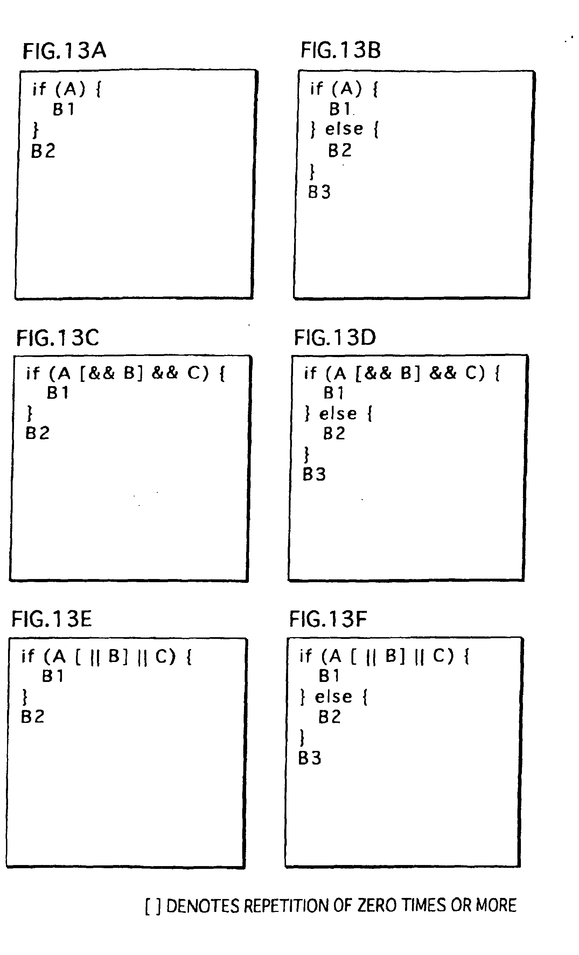

FIG. 13A is an if-then style based on a single comparison operation; FIG. 13B is an if-then-else style based on a single comparison operation; FIG. 13C is an if-then style based on two or more comparison operations joined by a logical AND operation; FIG. 13D is an if-then-else style based on two or more comparison operations joined by a logical AND operation; FIG. 13E is an if-then style based on two or more comparison operations joined by a logical OR operation; FIG. 13F is an if-then-else style based on two or more comparison operations joined by a logical OR operation.

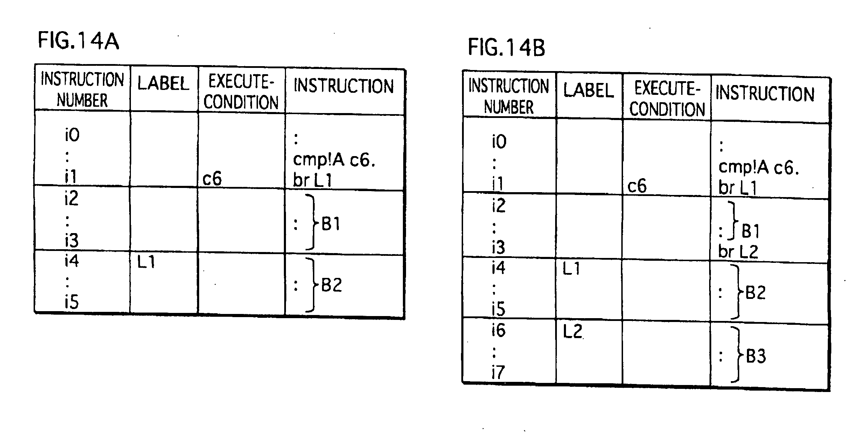

FIGs. 14A to 14F show assembler code information that is generated, with respect to the styles of conditional processes mentioned above, by the assembler code generating unit 120 and supplied to the conditional process converting unit 121.

The instructions shown in the instruction column in the drawing such as "cmpA C6", "cmpB C6", and "cmpC C6" are compare instructions for evaluating the compare expressions A, B, and C in the if sentences and storing the evaluation results into the condition flag register C6.

The instructions such as "cmp! A C6", "cmp ! B C6". and "cmp! C C6" are compare instructions for evaluating reversed conditions of the compare expressions A, B, and C in the if sentences and storing the evaluation results into the condition flag register C6.

As an example, compare instructions corresponding to a compare expression "x=y" are:
cmpeq C6, R0, R1 and
cmpne C6, R0, R1

These instructions are arranged so that they succeed the instructions shown below that are for transferring the variables x and y to the registers R0 and R1 respectively:
mov R0, x
mov R1, y

B1, B2, and B3 denote instruction sequences for executing the sentences B1 B2, and B3 in the source codes respectively. Just for convenience of explanation, none of B1, B2, and B3 include a conditional branch instruction. Basic blocks are shown divided by the dividing lines.

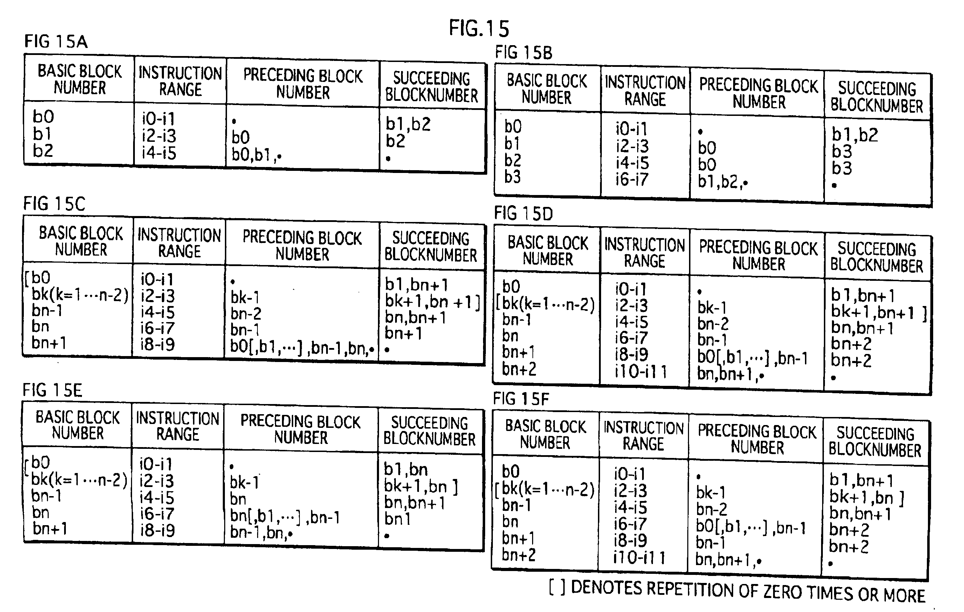

FIGs. 15A to 15F show basic block information corresponding to the assembler code information shown in FIGs. 14A to 14F. The basic block information is generated by the assembler code generating unit 120 and supplied to the conditional process converting unit 121. The dots " . " in the preceding block number column and the succeeding block number column each denote a number of a basic block that is not in the drawing.

The following describes how these basic blocks correspond to (a) the first part that describes a process for evaluating whether a comparison condition is satisfied, (b) the second part that describes a process tobe executed when the evaluation result of whether the comparison condition is satisfied is either affirmative or negative, and (c) the third part that describes a process to be executed when the evaluation result of the comparison condition is the opposite.

In FIGs. 14A and 15A, the basic block b0 is the first part and the basic block b1 is the second part.

In FIGs. 14B and 15B, the basic block b0 is the first part; the basic block b1 is the second part; and the basic block b2 is the third part.

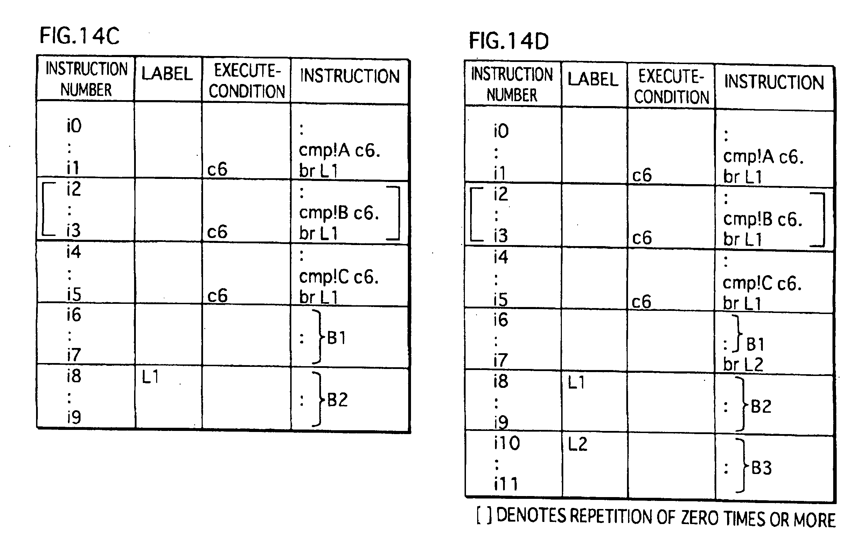

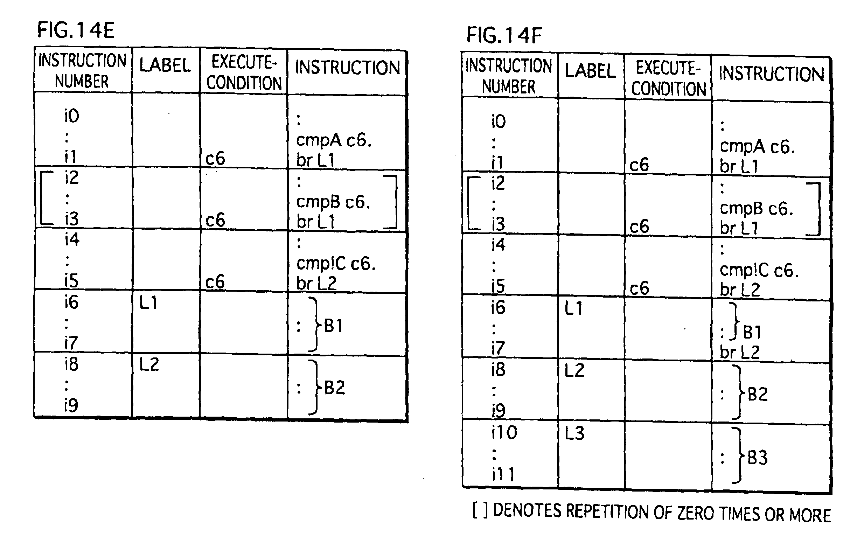

In FIGs. 14C, 15C, 14E, and 15E, the basic blocks b0 to bn-1 are the first part and the basic block bn is the second part. In this case, the comparison condition is described as a combined comparison condition.

In FIGs. 14D, 15D, 14F, and 15F, the basic blocks b0 to bn-1 are the first part; the basic block bn is the second part; and the basic block bn+1 is the third part. In this case, the comparison condition is described as a combined comparison condition.

### < 2. 2. 3 Details of the conditional process converting unit 121 >

The conditional process converting unit 121 detects, in the basic block information, a series of basic blocks including preceding blocks and succeeding blocks according to a pattern shown in FIGs. 15A to 15F. Then, the conditional process converting unit 121 identifies an instruction sequence in the assembler code information that corresponds to the detected series of basic blocks as a conversion target part. The instruction sequence in the conversion target part will be converted into an equivalent instruction sequence that does not include conditional branch instruction.

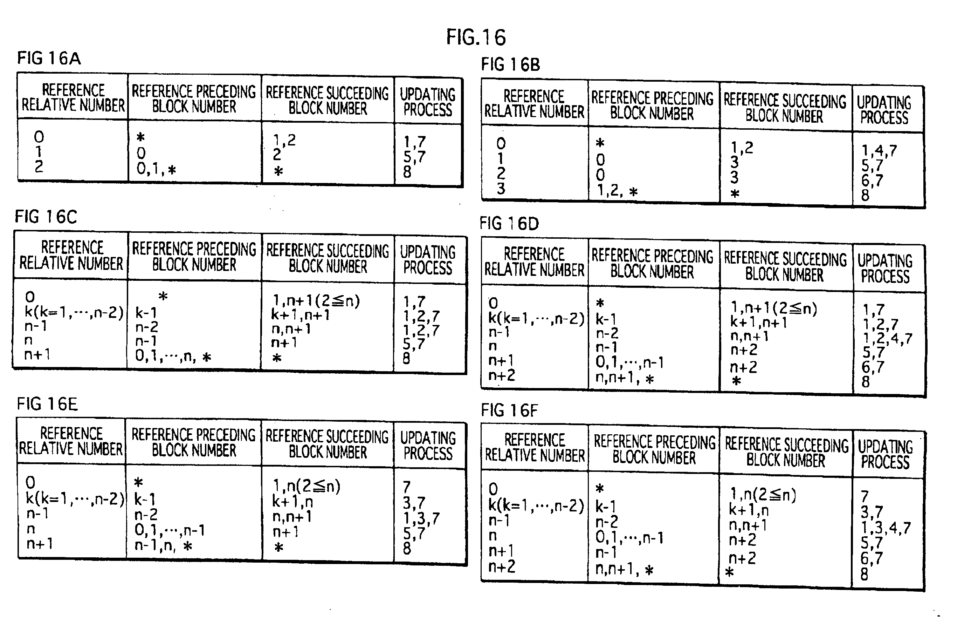

FIG. 16 shows the reference information A to F that is used in order that the conditional process converting unit 121 detects the series of basic blocks and converts the instruction sequence. In the reference information, the reference relative number column shows a relative position of each basic block in the series of basic blocks; the reference preceding block number column shows a relative position of the preceding block of each basic block; the reference succeeding block number column shows a relative position of the succeeding block of each basic block; and the updating process column shows an updating process to be applied to the instruction sequence corresponding to each basic block. The symbol "*" in the precedingblock number column and the succeeding block number column denotes that it matches zero or more arbitrary basic block number.

It should be noted here that an updating process to be applied to an instruction sequence included in the first part mentioned above corresponds to the first conversion step in Claim 15; an updating process to be applied to an instruction sequence included in the second part mentioned above corresponds to the second conversion step in Claim 15; and an updating process to be applied to an instruction sequence included in the third part mentioned above corresponds to the third conversion step in Claim 16.

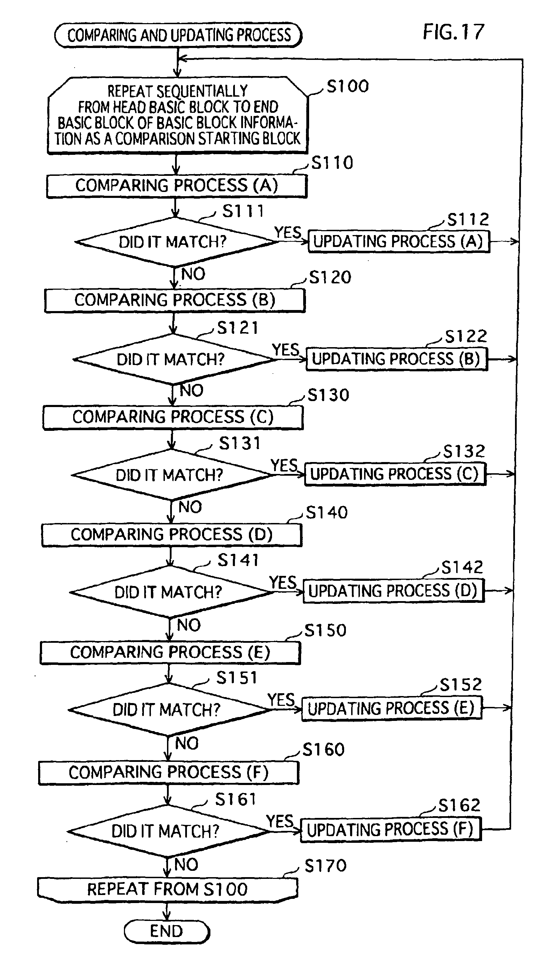

FIG. 17 is a flow chart that shows in detail a comparing and updating process performed by the conditional process converting unit 121.

The following describes the comparing and updating process with reference to the flow chart of FIG. 17.
Step S100: The procedure up to Step S170 will be repeated with each basic block in the basic block information from the head basic block to the end basic block sequentially taken as a comparison starting block.
Step S110: The reference information A will be compared with a series of basic block information in and after the comparison starting block. This comparing process will be explained in detail later.
Step S111: It will be judged if the preceding block and the succeeding block of the series of basic blocks matched the reference information A.
Step S112: When they matched, the updating process (A) will be performed. This updating process will be explained in detail later. The comparing process will be repeated from the head basic block of the basic block information.
Step S120: When they did not match, the reference information B will be compared with the series of basic block information in and after the comparison starting block.
Step S121: It will be judged if the reference information B matched.
Step S122: When it did, the updating process (B) will be performed. The comparing process will be repeated from the head basic block of the basic block information.
Step S130: When it did not, the reference information C will be compared with the series of basic block information in and after the comparison starting block.
Step S131: It will be judged if the reference information C matched.
StepS132: When it did, the updatingprocess (C) will be performed. The comparing process will be repeated from the head basic block of the basic block information.
Step S140: When it did not, the reference information D will be compared with the series of basic block information in and after the comparison starting block.
Step S141: It will be judged if the reference information D matched.
Step S142 : When it did, the updating process (D) will be performed. The comparing process will be repeated from the head basic block of the basic block information.
Step S150: When it did not, the reference information E will be compared with the series of basic block information in and after the comparison starting block.
Step S151: It will be judged if the reference information E matched.
Step S152 : When it did, the updatingprocess (E) will be performed. The comparing process will be repeated from the head basic block of the basic block information.
Step S160: When it did not, the reference information F will be compared with the series of basic block information in and after the comparison starting block.
Step S161: It will be judged if the reference information F matched.
Step S162: When it did, the updatingprocess (F) will be performed. The comparing process will be repeated from the head basic block of the basic block information.
Step S170: The procedure will be repeated from Step S100. When none of the reference information is matched after trying with all the basic blocks in the basic block information taken as a comparison starting block, the procedure ends.

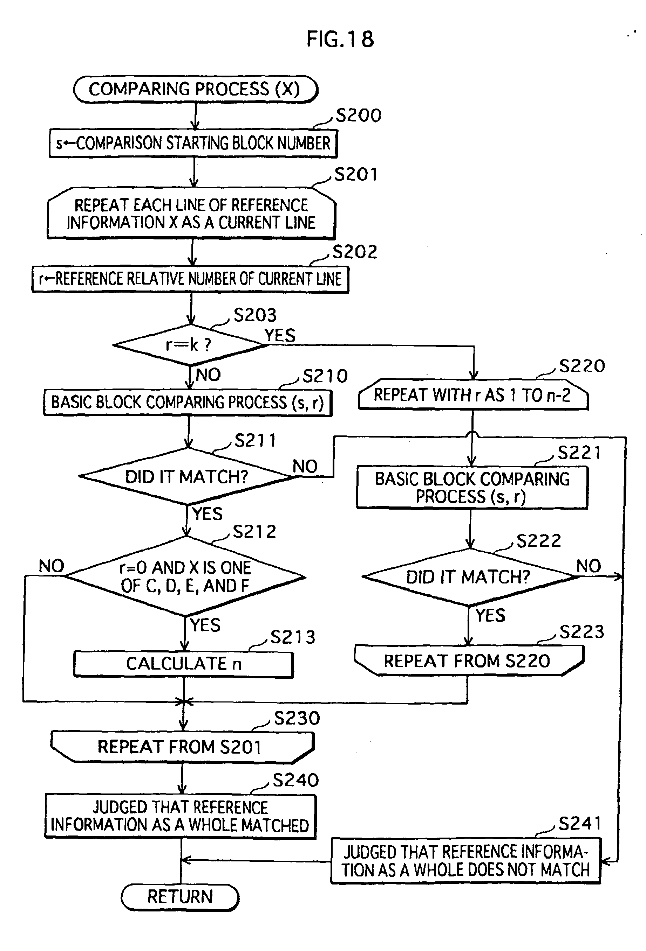

FIG. 18 is a flow chart that shows in detail the comparing process performed by the conditional process converting unit 121. This process is called by the comparing and updating process with designation of one of the reference information A to F. Also, this process is performed with use of a variable s that has a comparison starting block number and a variable r that has a relative number.

The following describes this comparing process with reference to the flow chart in FIG. 18.
Step S200: The comparing starting block number will be taken as the variable s.
Step 201: The procedure up to Step S230 will be repeated with each line of the designated reference information taken as a current line.
Step S202: A value shown in the reference relative number column of the current line will be taken as the variable r. When the value is expressed in an expression of n, the exact value will be calculated using the value of n calculated in Step S213 in the first-round loop.
Step S203 : When k is shown in the reference relative number column of the current line, Step S220 and later will be performed. When k is not shown, Step S210 and later will be performed.
Step S210: The reference information of the current line will be compared with a line of the basic block information having (s+r) in the basic block number column. This basic block comparing process will be explained in detail later.
Step S211: When they did not match, the procedure advances to Step S241.
Step S212: When they matched, if r=0 is satisfied, and also one of the reference information C to F is being processed, Step S213 will be performed.
Step S213: n will be calculated in the following manner: Among the numbers shown in the succeeding block number column, such a number that is not (s+1) will be taken as t. In a case where the reference information C or the reference information D is being processed, (t-s-1) will be taken as n. In a case where the reference information E or the reference information F is beingprocessed, (t-s) will be taken as n . The procedure advances to Step S230.
Step S220: The procedure up to Step S223 will be repeated with r being an integer from 1 to n-2. When n calculated in Step S213 satisfies (n-2)<1, Step S221, which is the main body of this repetition, will not be performed.
Step S221: The reference information of the current line will be compared with a line of the basic block information having (s+r) in the basic block number column.
Step S222: When they did not match, the procedure advances to Step S241.
Step S223: The procedure will be repeated from Step S220.
Step S230: The procedure will be repeated from Step S201.
Step 5240: It is judged that the reference information as a whole matched. This step is performed when it is judged that each line of the reference information matched.
Step S241: It will be judged that the reference information as a whole did not match.

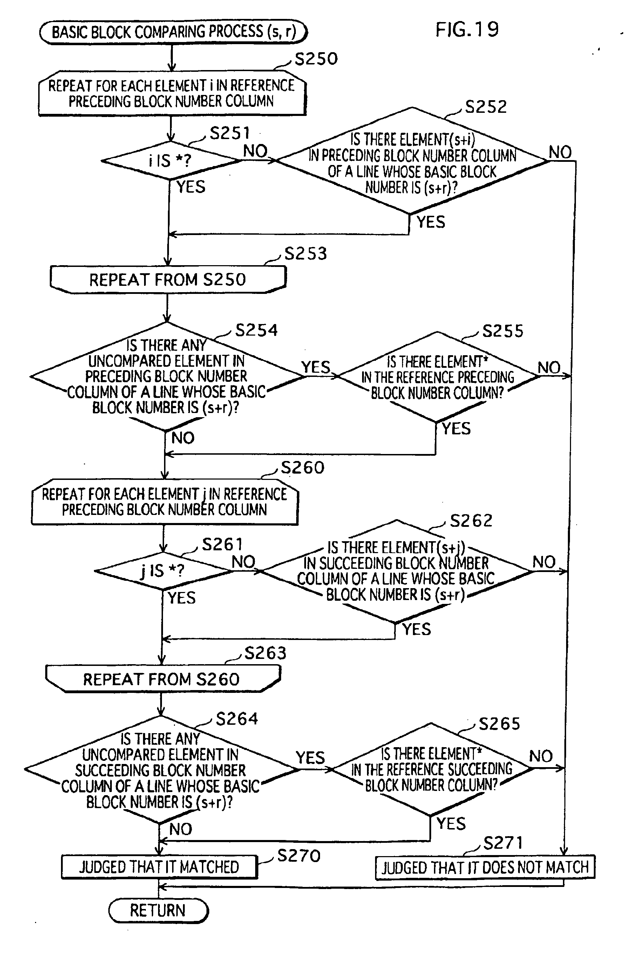

FIG. 19 is a flow chart that shows in detail the basic block comparing process performed by the conditional process converting unit 121. This process is called by the comparing process with designation of a comparison starting block number s and a relative number r. Also, this process is performed with use of a variable i that has a reference preceding block number and a variable j that has a reference succeeding block number.

The following explains this basic block comparing process with reference to the flow chart in FIG. 19.
Step S250: The procedure up to Step S253 will be repeated with each element retained in the reference preceding block number column of the current line taken as the variable i.
Step S251: When i is not *, Step S252 will be performed.
Step S252 : When the element (s+i) is not retained in the preceding block number column of a line of the basic block information having (s+r) in the basic block number column, the procedure advances to Step S271.
Step S253: The procedure will be repeated from Step S250.
Step S254: When there is an uncompared element retained in the preceding block number column of a line of the basic block information having (s+r) in the basic block number column, the procedure advances to Step S255.
Step S255: When the element "*" is not retained in the reference preceding block number column of the current line, the procedure advances to Step S271.
Step S260: The procedure up to Step S263 will be repeated with each element retained in the reference succeeding block number column of the current line taken as the variable j.
Step S261: When j is not *, Step S262 will be performed.
Step S262: When the element (s+j) is not retained in the succeeding block number column of a line of the basic block information having (s+r) in the basic block number column, the procedure advances to Step S271.
Step S263: The procedure will be repeated from Step S260.
Step S264: When there is an uncompared element retained in the succeeding block number column of a line of the basic block information having (s+r) in the basic block number column, the procedure advances to Step S265.
Step S265: When the element "*" is not retained in the reference succeeding block number column of the current line, the procedure advances to Step S271.
Step S270: It will be judged that they match.
Step S271: It will be judged that they did not match.

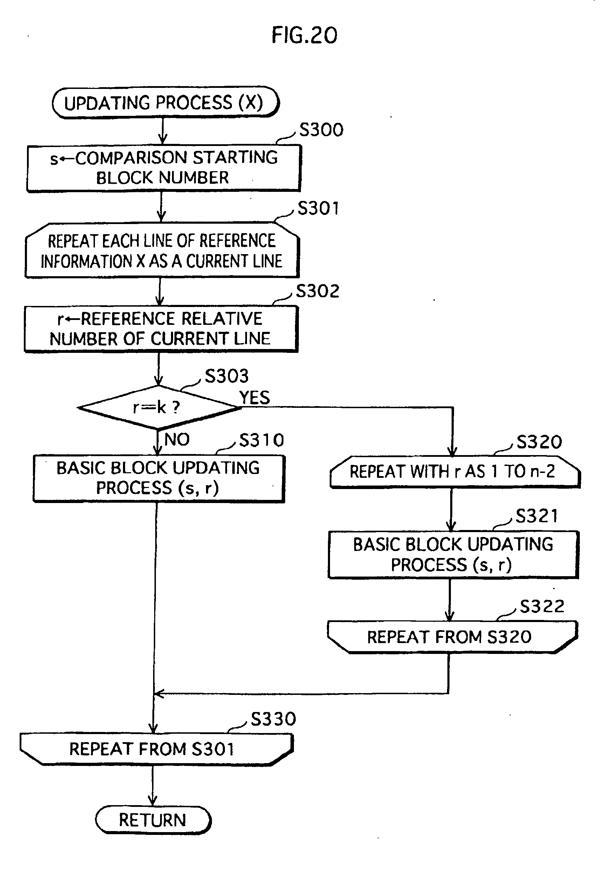

FIG. 20 is a flow chart that shows in detail the updating process performed by the conditional process converting unit 121. This process is called by the comparing and updating process with designation of one of the reference information A to F. Also, this process is performed with use of the variable s that has a comparison starting block number and the variable r that has a relative number.

The following explains this updating process with reference to the flow chart in FIG. 20.
Step S300: The comparison starting block number will be taken as the variable s.
Step 301: The procedure up to Step S330 will be repeated with each line of the designated reference information taken as a current line.
Step S302: A value shown in the reference relative number column of the current line will be taken as the variable r. When the value is expressed in an expression of n, the exact value will be calculated using the value of n calculated in Step S213. Step S303 : When k is shown in the reference relative number column of the current line, Step S320 and later will be performed. When k is not shown, Step S310 will be performed.
Step S310: A basic block updating process will be performed on the basic block (s+r) . This basic block updating process will be explained in detail later.
Step 320: The procedure up to Step S322 will be repeated with r being an integer from 1 to n-2. When n calculated in Step S213 satisfies (n-2)<1, this repetition will not be performed. Step S321: A basic block updating process will be performed on the basic block (s+r).
Step S322: The procedure will be repeated from Step S320.
Step S330: The procedure will be repeated from Step S301.

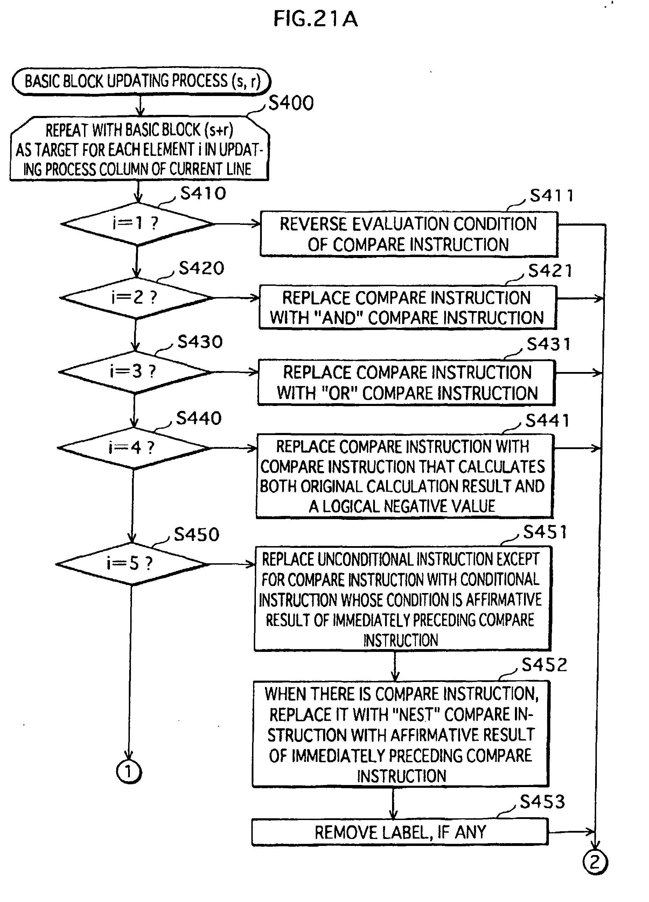

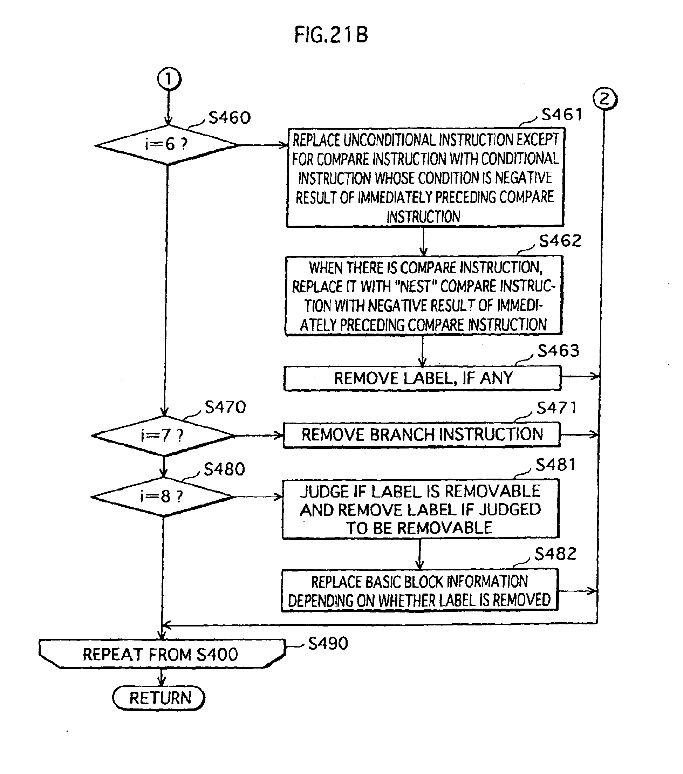

FIGS. 21A and 21B are flow charts that show in detail the basic block updating process per formed by the conditional process converting unit 121. This process is called by the updating process with designation of the comparison starting basic block number s and the relative number r. Also, this process is performed with use of the variable i that shows the updating process method.

The following explains this basic block updating process with reference to the flow charts in FIGs. 21A and 21B.
Step S400: The updating process will take, as an updating target, an instruction sequence corresponding to the basic block (s+r) in the assembler code information, and will be repeated with each element in the updating process column of the current line taken as the variable i.
Step S410: When i=1 is satisfied, Step S411 will be performed. Step S411: A compare instruction included in the updating target will be replaced with a new compare instruction for evaluating a reversed condition.
Step S420: When i=2 is satisfied, Step S421 will be performed. Step S421: A compare instruction included in the updating target will be replaced with a new compare instruction for calculating a new condition flag value that can be obtained by performing a logical AND operation on (a) a condition flag value calculated according to the compare instruction and (b) a condition flag value calculated according to an immediately preceding compare instruction. This new compare instruction is a cmpCCa instruction.
Step 5430: When i=3 is satisfied, Step S431 will be performed. Step S431: A compare instruction included in the updating target will be replaced with a new compare instruction for calculating a new condition flag value that can be obtained by performing a logical OR operation on (a) a condition flag value calculated according to the compare instruction and (b) a condition flag value calculated according to an immediately preceding compare instruction. This new compare instruction is a cmpCCo instruction.
Step S440: When i=4 is satisfied, Step S441 will be performed. Step S441: A compare instruction included in the updating target will be replaced with a new compare instruction for (a) calculating a condition flag value calculated according to the compare instruction as an affirmative condition flag value, and (b) calculating a logical NOT value of the condition flag as a negative condition value. This new compare instruction is one of a cmpCC instruction, a cmpCCa instruction, and a cmpCCo instruction whose operands are a pair of condition flag registers.
Step S450: When i=5 is satisfied, the Steps S451 to S453 will be performed.
Step S451: An unconditional instruction except for a compare instruction included in the updating target will be replaced with a conditional instruction whose execute-condition is a condition flag value calculated according to an immediately preceding compare instruction. When the affirmative condition flag value and the negative condition flag value are calculated according to the immediately preceding compare instruction, the unconditional instruction will be replaced with a conditional instruction whose execute-condition is this affirmative condition flag value.
Step S452: When the updating target includes a compare instruction and a conditional instruction whose execute-condition is condition flag value calculated according to the compare instruction, the compare instruction will be replaced with a new compare instruction for calculating a new condition flag value that can be obtained by performing a logical AND operation on the original condition flag value and a condition flag value calculated according to an immediately preceding compare instruction.

When the affirmative condition flag value and the negative condition flag value are calculated according to the original compare instruction, the compare instruction will be replaced with a new compare instruction for calculating a new affirmative condition flag value and a new negative condition flag value that can be obtained by performing a logical AND operation on a condition flag value calculated according to the preceding compare instruction and each of the original affirmative and negative condition flag values.

This new compare instruction is a cmpCCn instruction in the target processor.

It should be noted here that the updating target denotes a part describing a process to be executed when a comparison condition is satisfied (i.e. "the second part"mentioned above) . The compare instruction included in the updating target denotes a part describing a process for evaluating whether another comparison condition is satisfied (i.e. "the fourth part" in the claims).
Step S453: When a label is included in the updating target, the label will be removed.
Step S460: When i=6 is satisfied, Step S461 and later will be performed.
Step S461: An unconditional instruction except for a compare instruction included in the updating target will be replaced with a conditional instruction whose execute-condition is a negative condition flag value calculated according to an immediately preceding compare instruction.
Step S462: When the updating target includes a compare instruction and a conditional instruction whose execute-condition is a condition flag value calculated according to the compare instruction, the compare instruction will be replaced with a new compare instruction for calculating a new condition flag value that can be obtained by performing a logical AND operation on the originally calculated condition flag value and a negative condition flag value calculated according to an immediately preceding compare instruction.

When the affirmative condition flag value and the negative condition flag value are calculated according to the original compare instruction, the compare instruction will be replaced with a new compare instruction for calculating a new affirmative condition flag value and a new negative condition flag value that can be obtained by performing a logical AND operation on a negative condition flag value calculated according to the preceding compare instruction and each of the original affirmative and negative condition flag values.

This new compare instruction is a cmpCCn instruction in the target processor.

It should be noted here that the updating target denotes a part describing a process to be executed when a comparison condition is not satisfied (i.e. "the third part" mentioned above) . The compare instruction included in the updating target denotes a part describing a process for evaluating whether another comparison condition is satisfied (i.e. "the fifth part" in the claims).
Step S463: When a label is included in the updating target, the label will be removed.
Step S470: When i=7 is satisfied, Step S471 will be performed. Step S471: A branch instruction included in the updating target will be removed.
Step S480: When i=8 is satisfied, Step S481 and later will be performed.
Step S481: When there is no uncompared element retained in the preceding block number column of the basic block information that was compared last in the basic block comparing process, the label included in the updating target will be removed.
Step S482: When there is no such uncompared element, in the basic block information, the instruction range of the line whose basic block number is s will be updated so as to include the instruction ranges of all the lines whose basic block numbers are within the range of s to (s+r) ; the succeeding block will be replaced with a succeeding block of the line whose basic block number is (s+r); a preceding block (s+r) in a line that includes (s+r) as a preceding block will be replaced with s; and the lines whose basic block numbers are (s+1) to (s+r) will be deleted.

When there is such an uncompared element, in the basic block information, the instruction range of the line whose basic block number is s will be updated so as to include the instruction ranges of all the lines whose original basic block numbers are within the range of s to (s+r-1); the succeeding block will be replaced with (s+r) ; the preceding block of the line whose basic block number is (s+r) will be replaced with the uncompared element ands; and the lines whose basic block numbers are (s+1) to (s+r-1) will be deleted.

In both cases, after the updating process is performed, the basic block numbers will be replaced with serial numbers, and the preceding block and the succeeding block will be updated according to this update.

### < 2. 2. 4 Specific examples >

Explanation will be provided specifically on the comparing and updating process performed by the conditional process converting unit 121 on the assembler code information shown in FIG. 11A and the basic block information shown in FIG. 12.

In this specific example, at first, it is judged that the basic blocks 12 to 14 derived from the inner if sentence of the source program shown in FIG. 11B match the reference information A, and then the instructions 105 to 109 corresponding to these basic blocks will be replaced with an instruction sequence that does not include a branch instruction.

Next, it is judged that the basic blocks 10 to 14 after the updating, that are derived from the outer if sentence of the source program shown in FIG. 11B match the reference information F, and then the instructions 100 to 110 corresponding to these basic blocks after the updating will be replaced with an instruction sequence that does not include a branch instruction.

Consequently, an instruction sequence has been obtained that is for executing the source program shown in FIG. 11B and does not include a branch instruction.

The following explains in detail the comparing and updating process executed in relation to each of these two matches mentioned above, with reference to the flow charts in FIGS. 17 to 21B.

### < 2. 2. 4. 1 The comparing and updating process in relation to the first match >

### (1) A process with the basic block 10 taken as a comparison starting block

In the first time of the loop of Steps S100 to S170 shown in FIG. 17, a comparing process is performed in which the basic block 10 in FIG. 12 is taken as a comparison starting block.

In the comparing process (A) called by Step S110, the reference information A in FIG. 16A will be compared with the basic block sequence in and after the comparison starting block.

In Step S200 in FIG. 18, "10" will be assigned to the variable s.

In the first time of the loop of Steps S201 to S230, the first line of the reference information A will be the current line, and 0 which is shown in the reference relative number column of this current line will be assigned to the variable r.

In a basic block comparing process called by Step S210, the current line will be compared with the basic block 10.

In the loop of Steps S250 to S253 in FIG. 19, comparing process related to preceding blocks is performed. Because * is the only element shown in the reference preceding block number column of the current line, the comparing process in Step S252 will not be executed. In Step S254, it is judged that "9", which is shown in the basic block number column of the basic block 10, is uncompared. Because * is included in the reference preceding block number column of the current line, the procedure advances from Step S255 to S260.

In the loop of Steps S260 to S263, comparing process related to succeeding blocks is performed. "11" and "12" which are obtained by adding s to each of the elements "1" and "2" shown in the reference succeeding block number column of the current line will be compared with "11" and "12" which are shown in the succeeding block number column of the basic block information 10.

Subsequently, in Step S264, it is judged that there is no uncompared element. The procedure advances to Step S270, and it will be judged that the first line of the reference information A matched the basic block information 10.

In the second time of the loop of Steps S201 to S230 in FIG. 18, the second line of the reference information A will be the current line, and 1, which is shown in the reference relative number column of the current line, will be assigned to the variable r.

In the basic block comparing process called by Step S210, the current line will be compared with the basic block 11.

In the loop of Steps S250 to S253 in FIG. 19, "10" which is obtained by adding s to "0" shown in the reference preceding block number column of the current line will be compared with "10" which is shown in the preceding block number column of the basic block 11. In Step S254, it is judged that there is no uncompared element, and the procedure advances to Step S260.

In the loop of Steps S260 to Step 263, "12", which is obtained by adding s to "2" shown in the reference succeeding block number column of the current line, will be compared with "12" shown in the preceding block number column of the basic block 11. In Step S264, it is judged that "15" shown in the preceding block number column of the basic block 11 is uncompared. Because * is not included in the reference succeeding block number column of the current line, the procedure advances from Step S265 to Step S271, and it is judged that the second line of the reference information A does not match the basic block information 11.

Consequently, the procedure advances from Step S211 to S241 in FIG. 18, and it is judged that the reference information A does not match the basic block sequence in a case where the basic block 10 is taken as the comparison starting block.

The procedure then advances from Step S111 to Step S120 in FIG. 17. In the comparing process (B) called by Step S120, the reference information B in FIG. 16B will be compared with the basic block sequence in and after the comparison starting block. This process will be performed in the same manner as the comparingprocess (A), and it will be judged that the reference information B does not match the basic block sequence in a case where the basic block 10 is taken as the comparison starting block.

Hereafter, in the comparing processes C to F, it is judged that each of the reference information C to F does not match the basic block sequence in a case where the basic block 10 is taken as the comparison starting block.

### (2) Aprocess with the basic block 11 taken as a comparison starting block

In the second time of the loop of Steps S100 to S170, a comparing and updating process is performed in which the basic block 11 is taken as a comparison starting block. It will be judged that none of the reference information A to F matches the basic bock sequence in a case where the basic block 11 is taken as the comparison starting block.

### (3) Aprocess with the basic block 12 taken as a comparison starting block

In the third time of the loop from Steps S100 to S170, a comparing and updating process will be performed in which the basic block 12 is taken as a comparison starting block.

In Step S110, it is judged that the reference information A matches the basic block sequence in a case where the basic block 11 is taken as the comparison starting block. The procedure advances from Step S 111 to Step S 112, and the converting process

### (A) will be called.

In Step S300 in FIG. 20, "12" will be assigned to the variable s.

In the first time of the loop of Steps S301 to S330, the first line of the reference information A will be the current line, and "0" shown in the reference relative number column of this current line will be assigned to the variable r. In the basic block updating process called by Step S310, the process corresponding to the elements "1" and "7" which are shown in the updating process column of the current line will be applied to the instructions 105 to 107 that correspond to the basic block 12.

In the first time of the loop of Steps S400 to S490 in FIGs. 21A and 21B, "1" will be assigned to the variable i. By reversing the evaluation condition of the compare instruction 106 in Step S411, the original instruction cmpne c6, r1, 0 will be replaced with a new instruction cmpeq c6, r1, 0.

In the second time of the loop of Steps S400 to 5490, "7" will be assigned to the variable i, and the conditional branch instruction 107 will be removed in Step S471.

In the second time of the loop of Steps S301 to S330 in FIG. 20, the second line of the reference information A will be the current line, and "1" shown in the reference relative number column of the current line will be assigned to the variable r. In the basic block updating process, the process corresponding to the elements "5" and "7" which are shown in the updating process column of the current line will be applied to the instruction 108 that corresponds to the basic block 13.

In the first time of the loop of Steps S400 to S490 in FIGs. 21A and 21B, "5" will be assigned to the variable i. In Step S451, the instruction 108 will be replaced with a conditional instruction whose execute-condition is the affirmative condition flag value c6 that is calculated according to the immediately preceding compare instruction 106. Step S452 will not be executed because there is no applicable compare instruction. Step S453 will not be executed because there is no applicable label.

In the third time of the loop of Steps S301 to S330 in FIG. 20, the third line of the reference information A will be the current line, and "2" shown in the reference relative number column of the current line will be assigned to the variable r. In the basic block updating process, the process corresponding to the element "8" which is shown in the updating process column of the current line will be applied to the instruction 109 that corresponds to the basic block 14.

In the first time of the loop of Steps S400 to S490 in FIGS. 21A and 21B, "8" will be assigned to the variable i. In the previously performed comparing process, the elements "12" and "13" shown in the preceding block number column of the basic block 14 have already been compared with the elements "0" and "1" shown in the reference preceding block number column of the third line of the reference information A, and there is no uncompared elements left. Consequently, in step S481, it is judged that the label L3 attached to the instruction 109 is removable, and the label L3 will be removed.

In Step S482, the basic block 13 and the basic block 14 will be deleted from the basic block information shown in FIG. 12; the instruction range column of the basic block 12 will be replaced with "105-109"; the succeeding block number column will be replaced with "16"; and the elements "13" and "14" included in the preceding and succeeding block number columns of each basic block will be replaced with "12".

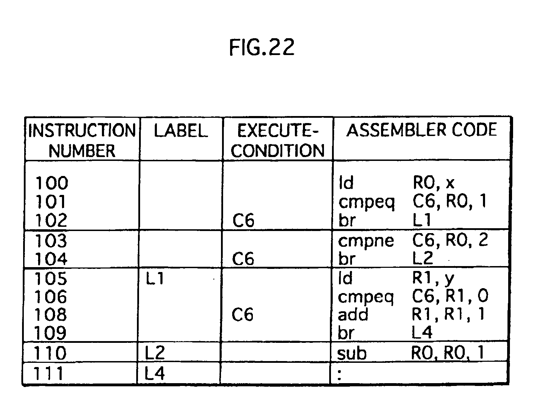

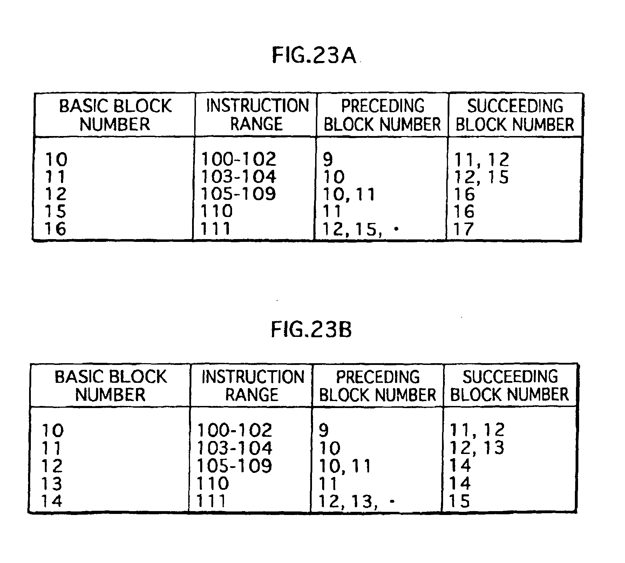

FIGS. 22 and 23A show the results after the assembler code information in FIG. 11A and the basic block information in FIG. 12 have been updated through the processes so far mentioned.

In Step S482, the basic block information in FIG. 23A will be further replaced with the basic block information in FIG. 23B so that the basic block numbers are consecutive.

This way, it is possible to convert the assembler code information and the basic block information derived from the inner if sentence described in the source program shown in FIG. 11B into a form that does not employ conditional branch instructions.

### < 2. 2. 4. 2 The comparing and updating process in relation to the second match >

After the comparing and updating process in relation to the first match is performed, the procedure returns to Step S100. The loop of Steps S100 to S170 will be executed with each basic block in the basic block information shown in FIG. 23B from the head block to the end block sequentially taken as a comparison starting block.

### (1) A process with the basic block 10 taken as a comparison starting block

In the first time of the loop of Steps S100 to S170, it is judged that the basic block sequence in FIG. 23B matches the reference information F in a case where the basic block 10 is taken as the comparison starting block, and the updating process (F) will be executed. The following explains some other operations that are not included in the comparing and updating process mentioned earlier.

In the comparing process (F) called by Step S160, "10" will be assigned to the variable s in Step S200.

In the first time of the loop of Steps S201 to S230, the first line of the reference information F will be the current line, and "0" which is shown in the reference relative number column of this current line will be assigned to the variable r. In the basic block comparing process called by Step S210, it is judged that the first line of the reference information F matches the basic block information 10.

At this time, r=0 is satisfied, and also the comparing process has been performed with use of the reference information F, n will be calculated in Step S213. The "n" will be calculated as "2" from a formula "12-10", using the element "12", other than the element indicated by (s+1), namely the element "11", among the elements "11" and "12" that are shown in the succeeding block number column of the basic block 10.

In the second time of the loop of the Steps S201 to S230, the second line of the reference information F will be the current line, and k which is shown in the reference relative number column of this current line will be assigned to the variable r. The procedure advances from Step S203 to the repetition process of Steps S220 to S223. At this time because (n-2)<1 is satisfied, Step S221 will not be executed.

In the third time of the loop of Steps S201 to S230/ the third line of the reference information F will be the current line, and 1 which can be obtained by calculating the exact value of n-1 shown in the reference relative number column of this current line will be assigned to the variable r. In the basic block comparing process called by Step S210, it is judged that the third line of the reference information F matches the basic block information 11.

In the fourth to sixth loops of Step S201 to S230, the fourth to sixth lines of the reference information F match the basic blocks 12 to 14 respectively.

In Step S240, it is judged that the reference information F matches a basic block sequence in which the basic block 10 is taken as the comparison starting block. The procedure advances from Step S161 to Step S162, and the updating process (F) will be called.

The following explains an operation unique to the updating process F which is not included in the updating process mentioned above.

The first line of the reference information F will be applied to the instructions 100 to 102 that correspond to the basic block 10. According to the element "7" shown in the updating process column, the conditional branch instruction 102 will be removed in Step S471.

The updating process corresponding to the second line of the reference information F will not be executed.

The third line of the reference information F will be applied to the instructions 103 and 104 that correspond to the basic block 11. According to the element "1" shown in the updating process column, Step S411 will be executed. By reversing the evaluation condition of the compare instruction 103, the original instruction, "cmpne c6, r0, 2" will be replaced with an instruction "cmpeq c6, r0, 2". Also, according to the element "3", Step S413 will be executed, and the updated instruction will be further replaced with a compare instruction "cmpeqo c6, r0, 2, c6" for calculating a logical OR value with the calculation result c6 of the immediately preceding compare instruction 101. Also, according to the element "4", Step S441 will be executed, and the instruction after the update will be further replaced with a compare instruction "cmpeqo c0:c1, r0, 2, c6" for calculating the original calculation result and its logical NOT value. According to the element "7", Step S471 will be executed, and the conditional branch instruction 104 will be removed.

The fourth line of the reference information F will be applied to the instructions 105 to 109 that correspond to the basic block 12. According to the element "5" shown in the updating process column, Steps S451 to S453 will be executed. Each of the unconditional instructions 105 and 109, excluding the compare instruction 106, will be replaced with a conditional instruction whose execute-condition is the affirmative result c0 of the immediately preceding post-update compare instruction 103. The compare instruction 106 will be replaced with "cmpeqn c6, r1, 0, c0", and the label L1 attached to the instruction 105 will be deleted.

According to the element "7", Step S471 will be executed, and the branch instruction 109 will be deleted.

The fifth line of the reference information will be applied to the instruction 110 that corresponds to the basic block 13. According to the element "6" shown in the updating process column, Step S461 will be executed, and the unconditional instruction 110 will be replaced with a conditional instruction whose execute-condition is the negative result c1 of the immediately preceding post-update compare instruction 103. Step S462 will not be executed because there is no applicable compare instruction. Then, Step S463 will be executed, and the label L2 attached to the instruction 110 will be deleted.

The sixth line of the reference information F will be applied to the instruction 111 that corresponds to the basic block 14. According to the element "8" shown in the updating process column, Steps S481 and S482 will be executed. Because all the elements shown in the preceding block number columns of the basic block 14 have already been compared in the previously performed comparing processes, it is judged that the label L4 attached to the instruction 111 is removable, and will be removed.

Subsequently, the basic blocks 11 to 14 will be deleted from the basic block information shown in FIG. 23B, and the instruction range column of the basic block 10 will be replaced with 100 - 111, and the succeeding block number column will be replaced with 15. The elements "11" to "14" included in the preceding and succeeding block number columns of each basic block will be replaced with "10". The post-update basic block information will be further updated so that the basic block numbers are consecutive. In this updating process, the preceding and succeeding block number columns will be also updated in correspondence with the updating of the basic block numbers.

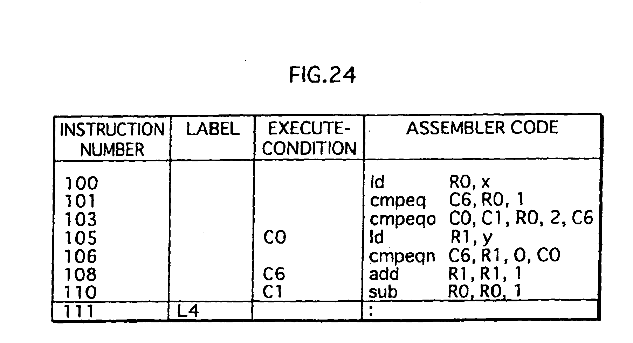

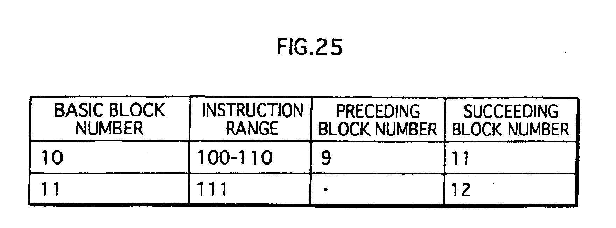

FIGs. 24 and 25 show the results of the updating of the assembler code information in FIG. 22 and the basic block information in FIG. 23B, according to the processes mentioned so far.

This way, the assembler code and the basic block information that are derived from the outer if-sentence described in the source program of FIG. 11B have been converted into forms that do not employ a conditional branch instruction.

### < 2.3 Details of the instruction scheduling unit 130>

The assembler code information and the basic block information that have been converted by the conditional process converting unit 121 will be inputted into the instruction scheduling unit 130. The dependence analyzing unit 131 takes each of the basic blocks shown in the inputted basic block information as the current block, and generates a dependence graph that indicates dependence regarding the execution order of the instructions in the current block. On the basis of the generated dependence graph, the instruction rearranging unit 136 sorts the instructions so that the instructions that are executable in parallel are arranged consecutively in the assembler code information within a range that the same execution result can be obtained, as well as generates parallel execution boundary information that fits the instruction sequence after the sorting.

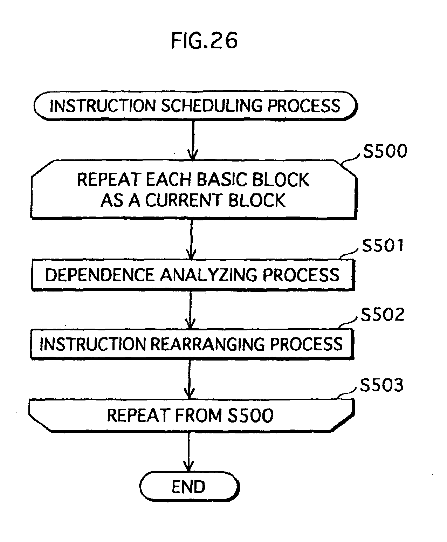

FIG. 26 is a flow chart that shows an instruction scheduling process performed by the instruction scheduling unit 130. Step S500: The procedure up to Step S503 will be repeated with each basic block shown in the basic block information taken as the current block.
Step S501: The dependence analyzing unit 131 generates a dependence graph that indicates dependence among the instructions corresponding to the current block.
Step S502: The instruction rearranging unit 136 sorts the instructions on the basis of the generated dependence graph and generates parallel execution boundary information.
Step S503: The procedure will be repeated from Step S500.

### < 2. 3. 1 Details of dependence >

When there is dependence between the first instruction and the second instruction located later in the program than the first instruction, it means that, when the second instruction is executed before the first instruction is executed, the execution result is not guaranteed to be the same as an execution result when the first and second instructions are executed in the order they are arranged.

When there is dependence, an instruction located earlier in the program will be referred to as a predecessor, and an instruction located later in the program will be referred to as a successor.

The dependence analyzing unit 131 determines dependence that exists between the instructions included in the inputted assembler code information by choosing from among the four types of dependence as below, and generates a dependence graph that indicates the dependence that has been determined:
(1) Data Dependence: Dependence that exists between (a) an instruction defining hardware resource excluding a condition flag register (e. g. a general register) and (b) an instruction referring to the hardware resource.
(2) Anti-dependence: Dependence that exists between (a) an instruction referring to hardware resource including a condition flag register and (b) an instruction defining the hardware resource.
(3) Output Dependence: Dependence that exists between (a) an instruction defining hardware resource including a condition flag register and (b) an instruction defining the hardware resource.
(4) Condition Flag Dependence: Dependence that exists between
   (a) an instruction defining a condition flag register and
   (b) an instruction referring to the condition flag register .

In the processor mentioned above, an instruction referring to a condition flag register is namely a compare instruction (such as a cmpCCa instruction, a cmpCCo instruction, and a cmpCCn instruction) for performing a logical operation on a condition flag register value and the result value of a comparison operation, as well as a conditional instruction whose execute-condition is a condition flag register value.

It is acceptable if the condition flag register value mentioned here is (a) a value that was calculated in or before the immediately preceding clock cycle and has already been stored in a condition flag register, or alternatively (b) a value that is calculated in the same clock cycle.

Regarding the aforementioned processor, the execution result would be the same even if the execution period of a successor having "Data Dependence" is moved up to the same clock cycle in which the predecessor is executed. Also, the execution result would be the same even if the execution period of a successor having "Anti-dependence", "Output Dependence", or "Condition Flag Dependence" is moved up to a clock cycle immediately succeeding the clock cycle in which the predecessor is executed. In these situations, it is expressed that the dependence distance in the former situation is 1, and the dependence distance in the latter situation is 0.

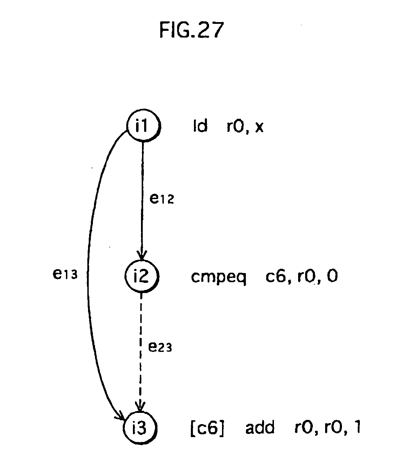

FIG. 27 schematically shows an example of a dependence graph. The dependence graph is a directed graph. The nodes denote instructions; the solid line edge denotes dependence by which the instructions are unexecutable in parallel (the dependence distance is 1); the dotted line edge denotes dependence by which the instructions are executable in parallel (the dependence distance is 0).

Since the expression method of directed graphs for calculator resources is a conventional technique that is publicly known, further explanation will be omitted.

### < 2. 3. 2 Details of the dependence analyzing unit 131 >

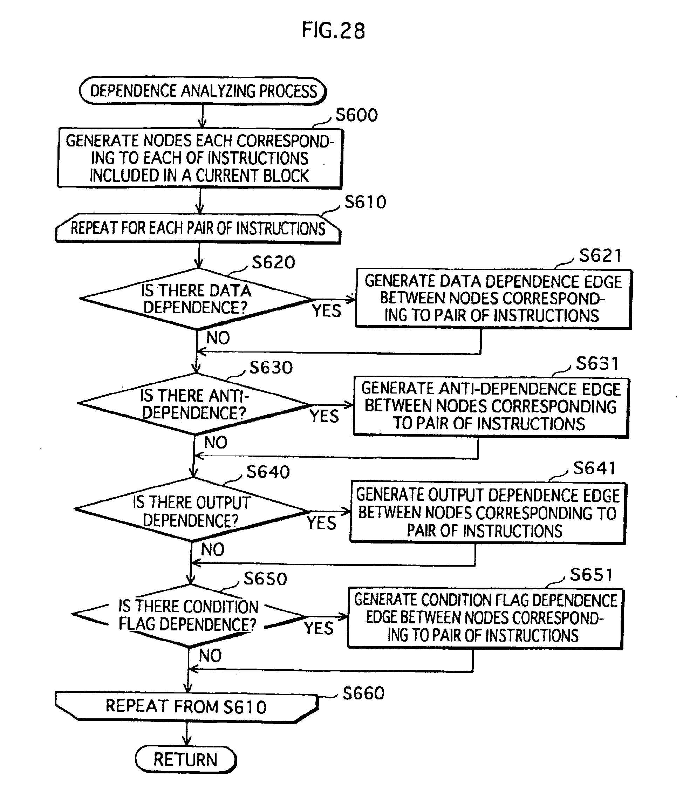

FIG. 28 is a flow chart that shows in detail the dependence analyzing process performed by the dependence analyzing unit 131.
Step S600: Nodes that each correspond to each of one or more instructions included in the current block will be generated. Step S610 : When there are two or more instructions, the procedure up to Step S660 will be repeated for each pair of instructions. Step S620: It is determined if there is "Data Dependence" between the pair of instructions or not. This judgment is made by seeing if the pair of instructions is made up of (a) an instruction defining hardware resource excluding a condition flag register (e. g. general register) and (b) an instruction referring to the hardware resource.
Step S621: When it is determined that there is "Data Dependence", a solid line edge will be generated between the nodes corresponding to the pair of instructions. The solid line edge denotes that the dependence distance is 1.
Step S630 : It is determined if there is "Anti-dependence" between the pair of instructions or not.
Step S631: When it is judged that there is "Anti-dependence", a dotted line edge will be generated between the nodes corresponding to the pair of instructions . The dotted line edge denotes that the dependence distance is 0.
Step S640: It is determined if there is "Output Dependence" between the pair of instructions or not.
Step S641: When it is judged that there is "Output Dependence", a dotted line edge will be generated between the nodes corresponding to the pair of instructions.
Step S650: It is judged if there is "Condition Flag Dependence" between the pair of instructions or not. This judgment is made by seeing if the pair of instructions is made up of (a) an instruction defining a condition flag register and (b) an instruction referring to the condition flag register.
Step S651: When it is judged that there is "Condition Flag Dependence", a dotted line edge will be generated between the nodes corresponding to the pair of instructions.
Step S660: The procedure will be repeated from Step S610.

### < 2. 3. 3 Details of the instruction rearranging unit 136>

The instruction rearranging unit 136 sorts the instructions so that the instructions in the assembler code information that are executable in parallel are arranged consecutively within a range that the order of instructions between which there is dependence will not be reversed, as well as generates parallel execution boundary information that fits an instruction sequence after the sorting.

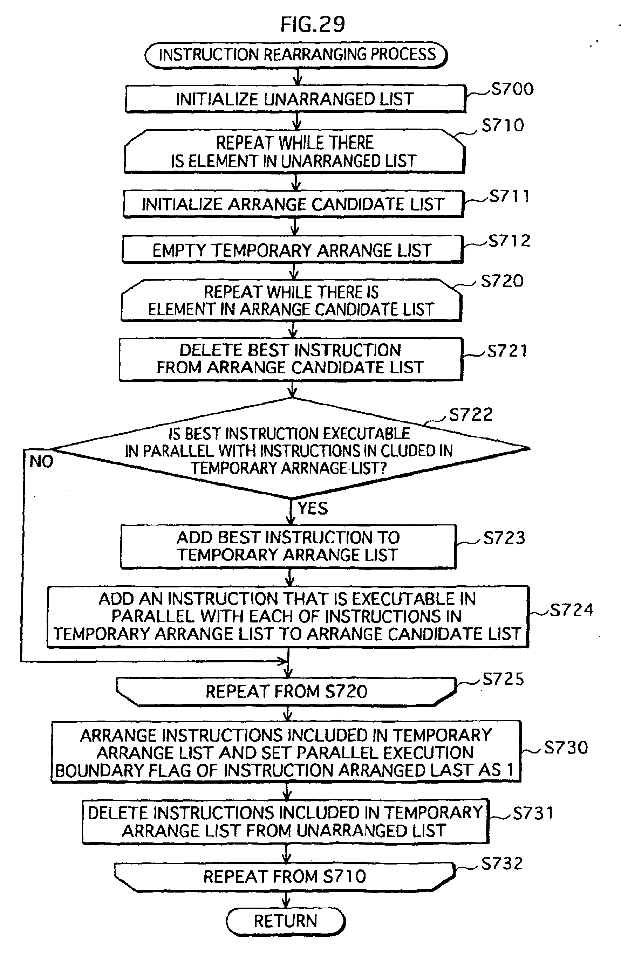

FIG. 29 is a flow chart that shows in detail the instruction rearranging process performed by the instruction rearranging unit 136. This process is performed with use of an unarranged list, an arrange candidate list, and a temporary arrange list that are variables each having a list of instruction numbers. Step S700: The unarranged list will be initialized as a list made up of the instruction numbers of the instructions included in the current block.
Step S701: While there is an element in the unarranged list, the procedure up to Step S732 will be repeated.
Step S711: The arrange candidate list will be initialized as a list made up of the instruction numbers of:
   Instruction (a) : an instruction that does not have any predecessor; and
   Instruction (b) : a successor that has one or more predecessors none of which is included in the unarranged list (in other words, all of which are already arranged).
Step S712: The temporary arrange list will be emptied.
Step S720: While there is an element in the arrange candidate list, the procedure up to Step S725 will be repeated.
Step S721: A best instruction will be selected from among the instructions listed in the arrange candidate list, the best instruction being expected to make the execution time of all instructions listed in the unarranged list shortest if arranged in the present time. The selection will be made as follows:

In the dependence graph, all paths that consist of nodes connected by edges starting from a node corresponding to each of the instructions listed in the arrange candidate list will be traversed. Subsequently, the total execution time of the instructions corresponding to the nodes on each of the traversed paths will be calculated, and the instruction corresponding to the starting node of the path for which the largest total execution time has been calculated will be selected as the best instruction.

The instruction number of the best instruction will be deleted from the arrange candidate list.
Step S722: When one or more instruction numbers are listed in the temporary arrange list, it is judged if each of the instructions indicatedby these numbers is executable in parallel with the best instruction in a same clock cycle. This judgment is made in consideration of restrictions related to the number of hardware resources. When the aforementioned processor is the target processor, the restrictions are:
   Restriction (a) : the number of instructions that are executable in parallel is three at maximum (A restriction due to the instruction decoder).
   Restriction (b): the number of hardware resources that can actually work in the execution unit according to the instructions executed in parallel is three at maximum in the operating unit, one in the operand access unit, and one in the PC unit. (A restriction due to the executing unit).

When the best instruction and each of the instructions listed in the temporary arrange list clear these restrictions, it will be determined that they are executable in parallel.

When it is determined that they are not executable in parallel, the procedure advances to Step S725.
Step S723: The instruction number of the best instruction will be added to the temporary arrange list.
Step S724 : When there is a successor (a) whose predecessor having "Anti-dependence", "Output Dependence", or "Condition Flag Dependence" between the successor is included in the temporary arrange list, and (b) whose predecessor having "Data Dependence" with the successor is not included in the unarranged list, the instruction number of the successor will be added to the arrange candidate list. This successor is an arrange candidate instruction that has possibility of being executed in parallel in a same cycle with an instruction listed in the temporary arrange list.
Step S725: The procedure will be repeated from Step S720.
Step S730: Each of the instructions listed in the temporary arrange list will be sequentially outputted. At this time, the parallel execution boundary flag of the instruction to be outputted last will be 1, and the parallel execution boundary flags of the other instructions will be 0.
Step S731: The instruction numbers listed in the temporary arrange list will be deleted from the unarranged list.
Step S732: The procedure will be repeated form Step S710.

### < 2. 3. 4 Specific examples >

Explanation will be provided on specific operations when the instruction scheduling process mentioned above is applied to the assembler code information in FIG. 24 and the basic block information in FIG. 25.

In one of the loops of Steps S500 to S503 shown in FIG. 26, the instruction scheduling unit 130 performs a dependence analyzing process and an instruction rearranging process with the basic block 10 taken as the current block.

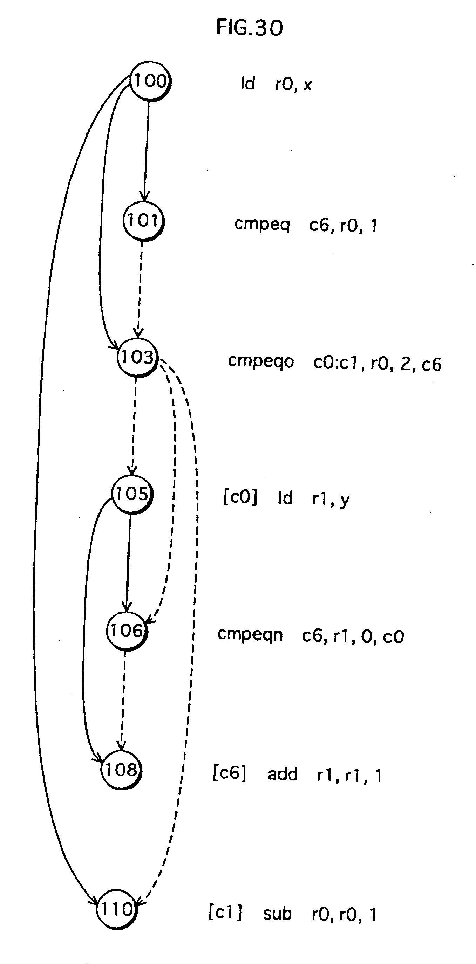

In Step S600 in FIG. 28, seven nodes that each correspond to the instructions 100, 101, 103, 105, 106, 108, and 110 will be generated. In the loop of Steps S610 to S660, it will be determined if there is "Data Dependence", "Anti-dependence", "Output Dependence", or "Condition Flag Dependence" between each of all the pairs of instructions that are made up of two instructions. An edge that indicates the dependence that has been determined will be gene ratedbetween the nodes corresponding to the pair of instructions that is judged to have dependence. As a result, the dependence graph shown in FIG. 30 will be generated.

Next, in Step S700 of FIG. 29, the unarranged list will be initialized as (100, 101, 103, 105, 106, 108, 110}.

Subsequently, the instructions are arranged through the loop of Steps S710 to S732 which will be executed three times.

### (1) The first time of the loop

In Step S711, only the instruction 100 can be categorized as the aforementioned "Instruction (a)", and there is no instruction that can be categorized as the aforementioned "Instruction (b)"; therefore, the arrange candidate list will be initialized as {100}. In Step S712, the temporary arrange list will be emptied as { }.

In Step S721, the instruction 100 will be judged as the best instruction, and the arrange candidate list will be empty { }. In Step S723, the instruction 100 will be added to the temporary arrange list, which will be {100}. In Step S724, no instruction will be added to the arrange candidate list, and it will remain empty as { }.

Because the arrange candidate list is empty { }, the procedure advances to Step S730, and the instruction 100 will be arranged with a parallel execution boundary flag being 1. In Step S731, the unarranged list will be {101, 103, 105, 106, 108, 110}.

### (2) The second time of the loop

In Step S711, only the instruction 101 can be categorized as the aforementioned "Instruction (b)"; therefore, the arrange candidate list will be initialized as {101} . In Step S712, the temporary arrange list will be empty { }.

In Step S721 that is executed in the first time of the loop of Steps S720 to S725, the instruction 101 is judged as the best instruction, and the arrange candidate list will be empty { }. In Step 723, the instruction 101 will be added to the temporary arrange list, which will be {101}. In Step S724, the instruction 103 will be added to the arrange candidate list, which will be {103}.

In Step S721 that is executed in the second time of the loop, the instruction 103 will be judged as the best instruction, and the arrange candidate list will be empty { } . In Step S722, the instruction 103 will be judged to be executable in parallel with the instruction 101. In Step S723, the instruction 103 will be added to the temporary arrange list, which will be {101, 103}. In Step S724, the instructions 105 and 110 that have possibilities of being executed in parallel with the instruction 103 will be added to the arrange candidate list, which will be {105, 110}.

In Step S721 that is executed in the third time of the loop, the instruction 105 will be judged as the best instruction, and the arrange candidate list will be {100}. In Step S722, the instruction 105 will be judged to be executable in parallel with the instruction 101 and the instruction 103. In Step S723, the instruction 105 will be added to the temporary arrange list, which will be {101, 103, 105}. In Step S724, no instruction will be added to the arrange candidate list, and it will remain as {110}.

In Step S721 that is executed in the fourth time of the loop, the instruction 110 will be judged as the best instruction, and the arrange candidate list will be empty { }. In Step S722, it will be judged that there is the aforementioned "Restriction (a) " between the instruction 110 and the instructions 101, 103, and 105. The temporary arrange list will remain as {101, 103, 105}, and the arrange candidate list will remain as empty { }.

Because the arrange candidate list is empty { }, the procedure advances to Step S730. The instruction 101 and the instruction 103 will be arranged with a parallel execution boundary flag being 0. The instruction 105 will be arranged with a parallel execution boundary flag being 1. In Step S731, the unarranged list will become {106, 108, 110}.

### (3) The third time of the loop

In Step S711, the instruction 106 and the instruction 110 can be categorized as the aforementioned "Instruction (b)"; therefore, the arrange candidate list will be initialized as {106, 110}. In Step S712, the temporary arrange list will be empty { }.

Subsequently, through the same operation performed in the second time of the loop, the instruction 106 and the instruction 108 will be arranged with a parallel execution boundary flag being 0, and the instruction 110 will be arranged with a parallel execution boundary flag being 1. In Step S731, the unarranged list will be empty { }.

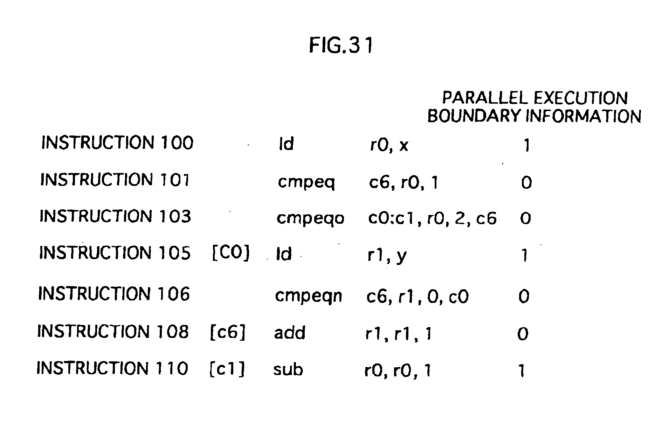

Because the unarranged list has become empty { }, the instruction rearranging process ends. Through the processes mentioned so far, a machine-language instruction sequence shown in FIG. 31 has been generated.

When the machine-language instruction sequence in FIG. 31 is compared with the assembler code information describing the assembler codes of the conventional style shown in FIG. 11A, it is understood that the number of instructions has decreased from 11 to 7, and the number of clock cycles needed for execution has decreased from 7 to 3.

### < Other modification examples >

The present invention has been so far explained according to the embodiment as above; however, the present invention is not limited to the embodiment mentioned above, needless to say. The present invention also includes the following cases:
(1) With the present invention, the method comprising the steps explained in the embodiment may be a computer program for actualizing it using a computer system. Alternatively, the method comprising the steps explained in the embodiment may be digital signals describing the computer program.
   The present invention may be of a computer readable recording medium onto which the computer program or the digital signals as above are recorded, e. g. a flexible disc, a hard disk, a CD, an MO, a DVD, a BD, a semiconductor memory etc.
   The present invention may be of the computer program or the digital signals as above that are transmitted via telecommunication circuits, wireless or wired communication circuits, or a network such as the Internet or the like.
   The present invention may be of a computer system comprising a microprocessor and a memory, wherein the memory stores the computer program as above and the microprocessor actualizes the methods by operating according to the computer program stored.
   The computer program and the digital signals as above may be recorded onto a recording medium and transferred, or may be transferred via the network as above or the like so that they are actualized in another independent computer system.
(2) In the embodiment, it is arranged that the processor 10 is operable to store therein an affirmative condition flag value and a negative condition flag value for an arbitrary pair of condition flag registers Cm:Cn; however, it is also acceptable to set limitation that the affirmative condition flag value and the negative condition flag value are stored in a pair of registers adjacent to each other, for example Cm:Cm+1 (m is one of 0, 2, and 4).
   With this limitation, it will be possible to provide a processor that has the equivalent effects as the processor 10 and has a circuit smaller in size. In addition, it will be possible to omit one of the fields that designate condition flag registers from the instruction format of the compare instruction.
(3) In the embodiment, a compare instruction for evaluating a comparison condition between general registers is used as an example of compare instructions executed by the processor 10; however, it is also acceptable to realize a compare instruction for comparing, for example, a general register and an immediate operand according to another addressing mode. Types of the addressing mode are matters of the conventional technique that is publicly known, and are not the gist of the present invention; therefore, detailed explanation will be omitted.
(4) In the embodiment, as an example, the conditional process converting unit 121 in the compiler apparatus 100 detects the assembler code information shown in FIGs . 14A to 14F as conversion targets which are derived from if-sentences with styles shown in FIGs. 13A to 13F; however, the conversion targets are not limited to the assembler code information that is generated being derived from those if sentences.
   The present invention also includes such a case where, for example, the assembler code generating unit 120 generates the assembler code information shown in FIGs . 14A to 14F derived from the ternary operator ( ? : ), and the conditional process converting unit 121 takes the assembler code information as conversion targets.
(5) As another embodiment of the present invention, it is also acceptable that the assembler code generating unit 120 generates assembler code information that does not include a conditional branch instruction directly from intermediate codes corresponding to a source program describing a conditional process.
   With this arrangement, the compiler upper unit 110 attaches, to the intermediate codes generated being derived from if-sentences and ternary operators and the like described in the source program, information for identifying parts such as (a) a part for evaluating a comparison condition, (b) a part to be executed when the comparison condition is satisfied, and (c) a part to be executed when the comparison condition is not satisfied. Then, the assembler code generating unit 120 is able to generate assembler code information that does not include a conditional branch instruction from the intermediate codes identified by the attached information.
(6) In the compiler apparatus 100, it is also acceptable that the instruction scheduling unit 130 compares, as to each conversion target part, the number of cycles necessary for execution before the conversion by the conditional process converting unit 121 and the number of cycles necessary for execution after the conversion, and when the latter is larger than the former, the instruction scheduling unit 130 restores the assembler code information in the conversion target part into the state before the conversion.

This arrangement will ensure that the program conversion brings about the effects of reducing the execution time.

Although the present invention has been fully described byway of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A processor comprising an instruction supplying unit for reading a plurality of instructions from a memory and storing the plurality of instructions therein, a decoding unit for decoding the plurality of instructions stored in the instruction supplying unit, an executing unit for executing in parallel a plurality of decoded instructions output from the decoding unit according to a result of decoding the plurality of instructions, and a nullifying unit operable to nullify a result of a conditional instruction according to a condition flag value,
**characterized in that** the executing unit includes: a first operation unit (441, 442), a second operation unit (443), a condition flag operation unit (51) and a nullifying unit (451, 452) wherein, if the plurality of decoded instructions include a second compare instruction to perform a comparison operation by using a result of a comparison operation having been performed according to a first compare instruction,
said first operating unit (441, 442) is operable to calculate a logical value (E1) determined according to a plurality of operands specified by the first compare instruction;
said second operating unit (443) is operable to perform an operation according to a decoded instruction being included in the plurality of decoded instructions to be executed in parallel, and being different from the second compare instruction;
said condition flag operating unit (51) is operable to calculate a first condition flag value (C0) by performing an operation according to: (a) the logical value (E1, C2) calculated by the first operating unit and (b) a second condition flag value (E2) determined according to a plurality of operands specified by the second compare instruction; and
said nullifying unit (451,452) is operable to, if the decoded instruction executed by the second operating unit is a conditional instruction corresponding to the first condition flag value, nullify a result of the conditional instruction executed by the second operating unit according to the first condition flag value, and wherein
the executing unit is arranged to execute the plurality of decoded instructions in parallel in a clock cycle,
the first operating unit is arranged to calculate the logical value before a first point of time partway through the clock cycle,
the condition flag operating unit is arranged to calculate the first condition flag value before a second point of time partway through the clock cycle after the first point of time, and
the nullifying unit is arranged to nullify the result of the conditional instruction according to the first condition flag value during a time period between the second point of time and an end of the clock cycle.

2. The processor of Claim 1, wherein
the condition flag operating unit includes:
a first logical circuit operable to calculate the first condition flag value by performing an operation according to the logical value and the second condition flag value; and
a second logical circuit operable to calculate a third condition flag value by performing an operation, which is different from the operation performed by the first logical circuit, according to the logical value and the second condition flag value, wherein
the nullifying unit nullifies the result of the conditional instruction according to the first condition flag value of the instruction executed by the second operating unit is a conditional instruction corresponding to the first condition flag value, and the nullifying unit nullifies the result of the conditional instruction according to the third condition flag value if the instruction executed by the second operating unit is a conditional instruction corresponding to the third condition flag value.

3. The processor of Claim 2, wherein
the third condition flag value is a logical NOT value of the first condition flag value.

4. The processor of Claim 2, wherein
the third condition flag value is a result value of a logical operation performed on (i) a logical NOT value of the logical value and (ii) the second condition flag value.

5. The processor of Claim 1, wherein
the executing unit further includes:
a third operating unit operable to calculate the second condition flag value in a clock cycle prior to a clock cycle in which the second compare instruction is executed; and
a condition flag register to store therein the second condition flag value calculated by the third operating unit, wherein
the condition flag operating unit calculates the first condition flag value by performing an operation according to the logical value calculated by the first operating unit and the second condition flag value stored in the condition flag register.

6. The processor of Claim 5, wherein
the condition flag operating unit includes:
a first logical circuit operable to calculate the first condition flag value by performing an operation according to the logical value and the second condition flag value; and
a second logical circuit operable to calculate a third condition flag value by performing an operation, which is different from the operation performed by the first logical circuit, according to the logical value and the second condition flag value, wherein
the nullifying unit nullifies the result of the conditional instruction according to the first condition flag value if the instruction executed by the second operating unit is a conditional instruction corresponding to the first condition flag value, and the nullifying unit nullifies the result of the conditional instruction according to the third condition flag value if the instruction executed by the second operating unit is a conditional instruction corresponding to the third condition flag value.

7. The processor of Claim 6, wherein
the third condition flag value is a logical NOT value of the first condition flag value.

8. The processor of Claim 6, wherein
the third condition flag value is a result value of a logical operation performed on (i) a logical NOT value of the logical value and (ii) the second condition flag value.

9. The processor of Claim 1, wherein
the executing unit further includes
a third operating unit operable to calculate the second condition flag value before a point of time partway through a clock cycle in which the second compare instruction is executed, wherein
the condition flag operating unit calculates the first condition flag value by performing an operation corresponding to the logical value calculated by the first operating unit and the second condition flag value calculated by the second operating unit.

10. The processor of Claim 9, wherein
the condition flag operating unit includes:
a first logical circuit operable to calculate the first condition flag value by performing an operation corresponding to the logical value and the second condition flag value; and
a second logical circuit operable to calculate a third condition flag value by performing an operation, which is different from the operation performed by the first logical circuit, corresponding to the logical value and the second condition flag value, wherein
the nullifying unit nullifies the result of the conditional instruction according to the first condition flag value if the instruction executed by the second operating unit is a conditional instruction corresponding to the first condition flag value, and the nullifying unit nullifies the result of the conditional instruction according to the third condition flag value if the instruction executed by the second operating unit is a conditional instruction corresponding to the third condition flag value.

11. The processor of Claim 10, wherein
the third condition flag value is a logical NOT value of the first condition flag value.

12. The processor of Claim 10, wherein
the third condition flag value is a result value of a logical operation performed on (i) a logical NOT value of the logical value and (ii) the second condition flag value.

## Patentansprüche

1. Prozessor, der eine Befehls-Zuführeinheit zum Lesen einer Vielzahl von Befehlen aus einem Speicher und zum Speichern der Vielzahl von Befehlen darin, eine Decodiereinheit zum Decodieren der Vielzahl in der Befehls-Zuführeinheit gespeicherter Befehle sowie eine Ausführeinheit zum parallelen Ausführen einer Vielzahl von der Decodiereinheit ausgegebener decodierter Befehle gemäß einem Ergebnis des Decodierens der Vielzahl von Befehlen sowie eine Aufhebeeinheit umfasst, die in Funktion ein Ergebnis eines bedingten Befehls gemäß einem Bedingungs-Flag-Wert aufheben kann,
**dadurch gekennzeichnet, dass** die Ausführeinheit eine erste Operationseinheit (441, 442), eine zweite Operationseinheit (443), eine Bedingungs-Flag-Operationseinheit (51) und eine Aufhebeeinheit (451, 452) enthält, wobei
wenn die Vielzahl decodierter Befehle einen zweiten Vergleichs-Befehl zum Durchführen einer Vergleichsoperation unter Verwendung eines Ergebnisses einer Vergleichsoperation enthält, die gemäß einem ersten Vergleichs-Befehl durchgeführt worden ist, die erste Operationseinheit (441, 442) in Funktion einen logischen Wert (E1) berechnen kann, der gemäß einer Vielzahl von Operanden bestimmt werden kann, die durch den ersten Vergleichs-Befehl spezifiziert werden;
die zweite Operationseinheit (443) in Funktion eine Operation gemäß einem decodierten Befehl durchführen kann, der in der Vielzahl parallel auszuführender decodierter Befehle enthalten ist und sich von dem zweiten Vergleichs-Befehl unterscheidet;
die Bedingungs-Flag-Operationseinheit (51) in Funktion einen ersten Bedingungs-Flag-Wert (C0) berechnen kann, indem sie eine Operation gemäß (a) dem durch die erste Operationseinheit berechneten logischen Wert (E1, C2) und (b) einem zweiten Bedingungs-Flag-Wert (E2) berechnen kann, der gemäß einer Vielzahl durch den zweiten Vergleichs-Befehl spezifizierter Operanden bestimmt wird; und
die Aufhebeeinheit (451, 452) in Funktion, wenn der durch die zweite Operationseinheit ausgeführte decodierte Befehl ein bedingter Befehl ist, der dem ersten Bedingungs-Flag-Wert entspricht, ein Ergebnis des durch die zweite Operationseinheit gemäß dem ersten Bedingungs-Flag-Wert ausgeführten bedingten Befehls aufheben kann, und wobei
die Ausführeinheit so eingerichtet ist, dass sie die Vielzahl decodierter Befehle parallel in einem Taktzyklus ausführt,
die erste Operationseinheit so eingerichtet ist, dass sie den logischen Wert vor einem ersten Zeitpunkt im Verlauf des Taktzyklus berechnet,
die Bedingungs-Flag-Operationseinheit so eingerichtet ist, dass sie den ersten Bedingungs-Flag-Wert vor einem zweiten Zeitpunkt im Verlauf des Taktzyklus nach dem ersten Zeitpunkt berechnet, und
die Aufhebeeinheit so eingerichtet ist, dass sie das Ergebnis des bedingten Befehls gemäß dem ersten Bedingungs-Flag-Wert während eines Zeitraums zwischen dem zweiten Zeitpunkt und einem Ende des Taktzyklus aufhebt.

2. Prozessor nach Anspruch 1, wobei
die Bedingungs-Flag-Operationseinheit einschließt:
eine erste Logikschaltung, die in Funktion den ersten Bedingungs-Flag-Wert berechnen kann, in dem sie eine Operation gemäß dem logischen Wert und dem zweiten Bedingungs-Flag-Wert durchführt; und
eine zweite Logikschaltung, die in Funktion einen dritten Bedingungs-Flag-Wert berechnen kann, indem sie eine Operation, die sich von der durch die erste Logikschaltung durchgeführten Operation unterscheidet, gemäß dem logischen Wert und dem zweiten Bedingungs-Flag-Wert durchführt, wobei
die Aufhebeeinheit das Ergebnis des bedingten Befehls gemäß dem ersten Bedingungs-Flag-Wert aufhebt, wenn der durch zweite Operationseinheit ausgeführte Befehl ein bedingter Befehl ist, der dem ersten Bedingungs-Flag-Wert entspricht, und die Aufhebeeinheit das Ergebnis des bedingten Befehls gemäß dem dritten Bedingungs-Flag-Wert aufhebt, wenn der durch die zweite Operationseinheit ausgeführte Befehl ein bedingter Befehl ist, der dem dritten Bedingungs-Flag-Wert entspricht.

3. Prozessor nach Anspruch 2, wobei
der dritte Bedingungs-Flag-Wert ein logischer NOT-Wert des ersten Bedingungs-Flag-Wertes ist.

4. Prozessor nach Anspruch 2, wobei
der dritte Bedingungs-Flag-Wert ein Ergebniswert einer logischen Operation ist, die an (I) einem logischen NOT-Wert des logischen Wertes und (II) dem zweiten Bedingungs-Flag-Wert durchgeführt wird.

5. Prozessor nach Anspruch 1, wobei
die Ausführeinheit des Weiteren enthält:
eine dritte Operationseinheit, die in Funktion den zweiten Bedingungs-Flag-Wert in einem Taktzyklus vor einem Taktzyklus berechnen kann, in dem der zweite Vergleichs-Befehl ausgeführt wird; und
ein Bedingungs-Flag-Register, in dem der durch die dritte Operationseinheit berechnete zweite Bedingungs-Flag-Wert gespeichert wird, wobei
die Bedingungs-Flag-Operationseinheit den ersten Bedingungs-Flag-Wert berechnet, indem sie eine Operation gemäß dem durch die erste Operationseinheit berechneten logischen Wert und dem in dem Bedingungs-Flag-Register gespeicherten zweiten Bedingungs-Flag-Wert durchführt.

6. Prozessor nach Anspruch 5, wobei
die Bedingungs-Flag-Operationseinheit einschließt:
eine erste Logikschaltung, die in Funktion den ersten Bedingungs-Flag-Wert berechnen kann, indem sie eine Operation gemäß dem logischen Wert und dem zweiten Bedingungs-Flag-Wert durchführt; und
eine zweite Logikschaltung, die in Funktion einen dritten Bedingungs-Flag-Wert berechnen kann, indem sie eine Operation, die sich von der durch die erste Logikschaltung durchgeführten Operation unterscheidet, gemäß dem logischen Wert und dem zweiten Bedingungs-Flag-Wert durchführt, wobei
die Aufhebeeinheit das Ergebnis des bedingten Befehls gemäß dem ersten Bedingungs-Flag-Wert aufhebt, wenn der durch zweite Operationseinheit ausgeführte Befehl ein bedingter Befehl ist, der dem ersten Bedingungs-Flag-Wert entspricht, und die Aufhebeeinheit das Ergebnis des bedingten Befehls gemäß dem dritten Bedingungs-Flag-Wert aufhebt, wenn der durch die zweite Operationseinheit ausgeführte Befehl ein bedingter Befehl ist, der dem dritten Bedingungs-Flag-Wert entspricht.

7. Prozessor nach Anspruch 6, wobei
der dritte Bedingungs-Flag-Wert ein logischer NOT-Wert des ersten Bedingungs-Flag-Wertes ist.

8. Prozessor nach Anspruch 6, wobei
der dritte Bedingungs-Flag-Wert ein Ergebniswert einer logischen Operation ist, die an (I) einem logischen NOT-Wert des logischen Wertes und (II) dem zweiten Bedingungs-Flag-Wert durchgeführt wird.

9. Prozessor nach Anspruch 1, wobei
die Ausführeinheit des Weiteren enthält:
eine dritte Operationseinheit, die in Funktion den zweiten Bedingungs-Flag-Wert vor einem Punkt im Verlauf eines Taktzyklus berechnen kann, in dem der zweite Vergleichs-Befehl ausgeführt wird; und
die Bedingungs-Flag-Operationseinheit den ersten Bedingungs-Flag-Wert berechnet, indem sie eine Operation entsprechend dem durch die erste Operationseinheit berechneten logischen Wert und dem durch die zweite Operationseinheit berechneten zweiten Bedingungs-Flag-Wert durchführt.

10. Prozessor nach Anspruch 9, wobei
die Bedingungs-Flag-Operationseinheit einschließt:
eine erste Logikschaltung, die in Funktion den ersten Bedingungs-Flag-Wert berechnen kann, indem sie eine Operation entsprechend dem logischen Wert und dem zweiten Bedingungs-Flag-Wert durchführt; und
eine zweite Logikschaltung, die in Funktion einen dritten Bedingungs-Flag-Wert berechnen kann, indem sie eine Operation, die sich von der durch die erste Logikschaltung durchgeführten Operation unterscheidet, entsprechend dem logischen Wert und dem zweiten Bedingungs-Flag-Wert durchführt, wobei
die Aufhebeeinheit das Ergebnis des bedingten Befehls gemäß dem ersten Bedingungs-Flag-Wert aufhebt, wenn der durch zweite Operationseinheit ausgeführte Befehl ein bedingter Befehl ist, der dem ersten Bedingungs-Flag-Wert entspricht, und die Aufhebeeinheit das Ergebnis des bedingten Befehls gemäß dem dritten Bedingungs-Flag-Wert aufhebt, wenn der durch die zweite Operationseinheit ausgeführte Befehl ein bedingter Befehl ist, der dem dritten Bedingungs-Flag-Wert entspricht.

11. Prozessor nach Anspruch 10, wobei
der dritte Bedingungs-Flag-Wert ein logischer NOT-Wert des ersten Bedingungs-Flag-Wertes ist.

12. Prozessor nach Anspruch 10, wobei
der dritte Bedingungs-Flag-Wert ein Ergebniswert einer logischen Operation ist, die an (I) einem logischen NOT-Wert des logischen Wertes und (II) dem zweiten Bedingungs-Flag-Wert durchgeführt wird.

## Revendications

1. Processeur comprenant une unité d'acheminement d'instructions pour lire une pluralité d'instructions provenant d'une mémoire et pour y stocker la pluralité d'instructions, une unité de décodage pour décoder la pluralité d'instructions stockées dans l'unité d'acheminement d'instructions, une unité d'exécution pour exécuter en parallèle une pluralité d'instructions décodées sorties de l'unité de décodage en fonction d'un résultat de décodage de la pluralité d'instructions, et une unité d'annulation permettant d'annuler un résultat d'une instruction conditionnelle en fonction d'une valeur d'indicateur de condition,
**caractérisé en ce que** l'unité d'exécution comprend : une première unité d'opération (441, 442), une deuxième unité d'opération (443), une unité d'opération d'indicateur de condition (51) et une unité d'annulation (451, 452) où, si la pluralité d'instructions décodées comprennent une deuxième instruction de comparaison pour réaliser une opération de comparaison en utilisant un résultat d'une opération de comparaison ayant été réalisée en fonction d'une première instruction de comparaison,
ladite première unité d'opération (441, 442) permet de calculer une valeur logique (E1) déterminée en fonction d'une pluralité d'opérandes spécifiés par la première instruction de comparaison ;
ladite deuxième unité d'opération (443) permet de réaliser une opération en fonction d'une instruction décodée incluse dans la pluralité d'instructions décodées à exécuter en parallèle, et différente de la deuxième instruction de comparaison ;
ladite unité d'opération d'indicateur de condition (51) permet de calculer une première valeur d'indicateur de condition (C0) en réalisant une opération en fonction de : (a) la valeur logique (E1, C2) calculée par la première unité d'opération et (b) une deuxième valeur d'indicateur de condition (E2) déterminée en fonction d'une pluralité d'opérandes spécifiés par la deuxième instruction de comparaison ; et
ladite unité d'annulation (451, 452) permet, si l'instruction décodée exécutée par la deuxième unité d'opération est une instruction conditionnelle correspondant à la première valeur d'indicateur de condition, d'annuler un résultat de l'instruction conditionnelle exécutée par la deuxième unité d'opération en fonction de la première valeur d'indicateur de condition, et dans lequel
l'unité d'exécution est agencée pour exécuter la pluralité d'instructions décodées en parallèle dans un cycle d'horloge,
la première unité d'opération est agencée pour calculer la valeur logique avant un premier moment du cycle d'horloge,
l'unité d'opération d'indicateur de condition est agencée pour calculer la première valeur d'indicateur de condition avant un deuxième moment du cycle d'horloge après le premier moment, et
l'unité d'annulation est agencée pour annuler le résultat de l'instruction conditionnelle en fonction de la première valeur d'indicateur de condition durant une période entre le deuxième moment et une fin du cycle d'horloge.

2. Processeur selon la revendication 1, dans lequel l'unité d'opération d'indicateur de condition comprend :
un premier circuit logique permettant de calculer la première valeur d'indicateur de condition en réalisant une opération en fonction de la valeur logique et de la deuxième valeur d'indicateur de condition ; et
un deuxième circuit logique permettant de calculer une troisième d'indicateur de condition en réalisant une opération, qui est différente de l'opération réalisée par le premier circuit logique, en fonction de la valeur logique et de la deuxième valeur d'indicateur de condition, dans lequel
l'unité d'annulation annule le résultat de l'instruction conditionnelle en fonction de la première valeur d'indicateur de condition si l'instruction exécutée par la deuxième unité d'opération est une instruction conditionnelle correspondant à la première valeur d'indicateur de condition, et l'unité d'annulation annule le résultat de l'instruction conditionnelle en fonction de la troisième valeur d'indicateur de condition si l'instruction exécutée par la deuxième unité d'opération est une instruction conditionnelle correspondant à la troisième valeur d'indicateur de condition.

3. Processeur selon la revendication 2, dans lequel
la troisième valeur d'indicateur de condition est une valeur NON logique de la première valeur d'indicateur de condition.

4. Processeur selon la revendication 2, dans lequel
la troisième valeur d'indicateur de condition est une valeur de résultat d'une opération logique réalisée sur (i) une valeur NON logique de la valeur logique et (ii) la deuxième valeur d'indicateur de condition.

5. Processeur selon la revendication 1, dans lequel l'unité d'exécution comprend en outre :
une troisième unité d'opération permettant de calculer la deuxième valeur d'indicateur de condition dans un cycle d'horloge avant un cycle d'horloge dans lequel la deuxième instruction de comparaison est exécutée ; et
un registre d'indicateur de condition pour y stocker la deuxième valeur d'indicateur de condition calculée par la troisième unité d'opération, dans lequel
l'unité d'opération d'indicateur de condition calcule la première valeur d'indicateur de condition en réalisant une opération en fonction de la valeur logique calculée par la première unité d'opération et de la deuxième valeur d'indicateur de condition stockée dans le registre d'indicateur de condition.

6. Processeur selon la revendication 5, dans lequel l'unité d'opération d'indicateur de condition comprend :
un premier circuit logique permettant de calculer la première valeur d'indicateur de condition en réalisant une opération en fonction de la valeur logique et de la deuxième valeur d'indicateur de condition ; et
un deuxième circuit logique permettant de calculer une troisième valeur d'indicateur de condition en réalisant une opération, qui est différente de l'opération réalisée par le premier circuit logique, en fonction de la valeur logique et de la deuxième valeur d'indicateur de condition, dans lequel
l'unité d'annulation annule le résultat de l'instruction conditionnelle en fonction de la première valeur d'indicateur de condition si l'instruction exécutée par la deuxième unité d'opération est une instruction conditionnelle correspondant à la première valeur d'indicateur de condition, et l'unité d'annulation annule le résultat de l'instruction conditionnelle en fonction de la troisième valeur d'indicateur de condition si l'instruction exécutée par la deuxième unité d'opération est une instruction conditionnelle correspondant à la troisième valeur d'indicateur de condition.

7. Processeur selon la revendication 6, dans lequel
la troisième valeur d'indicateur de condition est une valeur NON logique de la première valeur d'indicateur de condition.

8. Processeur selon la revendication 6, dans lequel
la troisième valeur d'indicateur de condition est une valeur de résultat d'une opération logique réalisée sur (i) une valeur NON logique de la valeur logique et (ii) la deuxième valeur d'indicateur de condition.

9. Processeur selon la revendication 1, dans lequel l'unité d'exécution comprend en outre
une troisième unité d'opération permettant de calculer la deuxième valeur d'indicateur de condition avant un moment d'un cycle d'horloge dans lequel la deuxième instruction de comparaison est exécutée, dans lequel
l'unité d'opération d'indicateur de condition calcule la première valeur d'indicateur de condition en réalisant une opération correspondant à la valeur logique calculée par la première unité d'opération et à la deuxième valeur d'indicateur de condition calculée par la deuxième unité d'opération.

10. Processeur selon la revendication 9, dans lequel l'unité d'opération d'indicateur de condition comprend :
un premier circuit logique permettant de calculer la première valeur d'indicateur de condition en réalisant une opération correspondant à la valeur logique et à la deuxième valeur d'indicateur de condition ; et
un deuxième circuit logique permettant de calculer une troisième valeur d'indicateur de condition en réalisant une opération, qui est différente de l'opération réalisée par le premier circuit logique, correspondant à la valeur logique et à la deuxième valeur d'indicateur de condition, dans lequel
l'unité d'annulation annule le résultat de l'instruction conditionnelle en fonction de la première valeur d'indicateur de condition si l'instruction exécutée par la deuxième unité d'opération est une instruction conditionnelle correspondant à la première valeur d'indicateur de condition, et l'unité d'annulation annule le résultat de l'instruction conditionnelle en fonction de la troisième valeur d'indicateur de condition si l'instruction exécutée par la deuxième unité d'opération est une instruction conditionnelle correspondant à la troisième valeur d'indicateur de condition.

11. Processeur selon la revendication 10, dans lequel
la troisième valeur d'indicateur de condition est une valeur NON logique de la première valeur d'indicateur de condition.

12. Processeur selon la revendication 10, dans lequel
la troisième valeur d'indicateur de condition est une valeur de résultat d'une opération logique réalisée sur (i) une valeur NON logique de la valeur logique et (ii) la deuxième valeur d'indicateur de condition.
